(19) Europäisches Patentamt / European Patent Office / Office européen des brevets

(11) **EP 2 832 417 A1**

(12) **EUROPEAN PATENT APPLICATION**
published in accordance with Art. 153(4) EPC

(43) Date of publication:
**04.02.2015 Bulletin 2015/06**

(51) Int Cl.:
**B01D 39/20** (2006.01)     **B01D 46/00** (2006.01)
**C04B 35/565** (2006.01)     **C04B 38/06** (2006.01)

(21) Application number: **13769562.3**

(22) Date of filing: **21.03.2013**

(86) International application number:
**PCT/JP2013/057974**

(87) International publication number:
**WO 2013/146499 (03.10.2013 Gazette 2013/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.03.2012   JP 2012082500**

(71) Applicant: **NGK Insulators, Ltd.
Nagoya-city, Aichi 467-8530 (JP)**

(72) Inventors:
• **SAKASHITA, Satoshi
Nagoya-city
Aichi 467-8530 (JP)**

• **SOKAWA, Shingo
Nagoya-city
Aichi 467-8530 (JP)**
• **NAGAOKA, Hiroyuki
Nagoya-city
Aichi 467-8530 (JP)**
• **WATANABE, Yuichiro
Nagoya-city
Aichi 467-8530 (JP)**
• **UCHIDA, Yasushi
Nagoya-city
Aichi 467-8530 (JP)**

(74) Representative: **Naylor, Matthew John et al
Mewburn Ellis LLP
33 Gutter Lane
London
EC2V 8AS (GB)**

(54) **POROUS BODY, HONEYCOMB FILTER AND MANUFACTURING METHOD FOR POROUS BODY**

(57)     Porous body data 60 where position information and type information are correlated by CT scan is created. Based thereupon, multiple virtual curved surface solids made up of parent virtual spheres and child virtual spheres are placed so as to fill in space pixels with curved surface solid pixels occupied by the virtual curved surface solids, based on the porous body data 60, and fluid analysis is performed regarding the porous body data 60 (S100 through 110) and microstructure analysis is performed (S120 through S160). The porous body at this time satisfies at least one of the following three conditions; "the average value of multiple in-plane uniformity indices $\gamma_X$ is 0.6 or greater, and the spatial uniformity index $\gamma$ is 0.6 or greater", "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less", and "the percentage of the total value of volume of mid-diameter curved surface solids as to the total value of volume of multiple virtual curved surface solids is 60% or more".

**FIG. 6**

ANALYSIS PROCESSING ROUTINE

VIRTUAL CURVED SURFACE SOLID PLACEMENT PROCESSING — S100

FLUID ANALYSIS PROCESSING — S110

IN-PLANE UNIFORMITY INDEX EVALUATION PROCESSING — S120

SPATIAL UNIFORMITY INDEX EVALUATION PROCESSING — S130

PRESSURE DROP EVALUATION PROCESSING — S140

FLOW-THROUGH VELOCITY EVALUATION PROCESSING — S150

EQUIVALENT DIAMETER EVALUATION PROCESSING — S160

ANALYSIS RESULT OUTPUT PROCESSING — S170

END

**Description**

Technical Field

The present invention relates a porous body, a honeycomb filter, and a manufacturing method of the porous body.

Background Art

There are known honeycomb filters and the like to purge exhaust fumes which use porous body. For example, PTL 1 describes a manufacturing method of a porous body, where ceramic particles, fine particles, and a sintering aid are mixed to form a green body, which is formed to yield a compact. The compact is sintered at a predetermined sintering temperature, and thus the porous body is manufactured. PTL 1 describes that, with the described manufacturing method, the pressure drop in a porous body to be manufactured can be suppressed by restricting the average particle size of the ceramic particles.

Citation List

Patent Literature

PTL 1: International Publication No. 2006/001509

Summary of Invention

Technical Problem

It is preferable with such porous body that the pressure drop occurring when a fluid passes through is as low as possible, and that the collection performance of particulate matter (PM) in the exhaust fumes is as high as possible. Accordingly, there has been demand for a porous body with which pressure drop is further reduced and collection performance is further improved.

The present invention has been made to solve such problems, and it is a primary object thereof to provide a porous body and a honeycomb filter with which pressure drop is sufficiently reduced and collection performance is sufficiently improved.

Solution to Problem

The following means were employed for the porous body, honeycomb filter, and manufacturing method of the porous body according to the present invention, to achieve the aforementioned primary object.

A first porous body according to the present invention is a porous body, wherein, when creating porous body data based on an image obtained by a 3-dimensional scan of the porous body, in which porous body data is correlated position information representing position of a pixel in the image, and pixel type information representing whether a space pixel representing that the pixel is space or a matter pixel representing that the pixel is matter,

performing a processing of placing, as to the porous body data, one parent virtual sphere having the greatest spherical diameter that can be placed so as to fill in the space pixels without overlapping with the matter pixel, placing at least one child virtual sphere such that the center of the child virtual sphere overlaps with the placed parent virtual sphere and pixels occupied by the child virtual sphere fill in the space pixels without overlapping with the matter pixel, and placing one virtual curved surface solid formed of the parent virtual sphere and the child virtual sphere so as to fill in the space pixels with curved surface solid pixels which are pixels occupied by the virtual curved surface solid, and repeating this processing such that pixels occupied by different virtual curved surface solids do not overlap each other, thereby placing a plurality of the virtual curved surface solids,

performing fluid analysis regarding a case of inflow of a fluid from a predetermined inflow face of the porous body by the lattice Boltzmann method based on the porous body data, and thereby deriving a flow velocity vector of the fluid for each space pixel at the time of the fluid passing through the porous body, and

deriving a plurality of in-plane uniformity indices $\gamma_x$ of flow velocity at a cross-section on the porous body parallel to the inflow face, by the following Expression (1), based on information relating to the placed virtual curved surface solids and information relating to the derived flow velocity vector for each space pixel, and deriving a spatial uniformity index $\gamma$ of flow velocity at the porous body by the following Expression (2) using the derived in-plane uniformity indices $\gamma_x$;

the average value of the plurality of in-plane uniformity indices $\gamma_x$ is 0.6 or greater, and the spatial uniformity index $\gamma$ is

0.6 or greater.

$$\gamma_x = 1 - \frac{1}{2} \sum_{i=1}^{n} \frac{|u_i - u_{mean}| \cdot A_i}{u_{mean} \cdot A} \qquad \cdots \text{Expression (1)}$$

where

n: number [count] of virtual curved surface solids within cross-section
x: distance [m] between cross-section and inflow face
$u_i$: average flow velocity (i = 1, 2, ..., n) [m/s] for each of the n virtual curved surface solids at cross-section
$u_{mean}$: average value ($=(u_i + u_2 + ... + u_n)/n$) [m/s] of average flow velocity $u_i$ at cross-section
$A_i$: cross-sectional area (i = 1, 2, ..., n) [m$^2$] for each virtual curved surface solid within cross-section
A: total cross-sectional area (= $A_1 + A_2 + ... + An$) [m$^2$] of virtual curved surface solids at cross-section

$$\gamma = \overline{\gamma_x} \cdot (1 - \delta_\gamma) \qquad \cdots \text{Expression (2)}$$

where

$\overline{\gamma_x}$ : average value of $\gamma_x$
$\delta_\gamma$: standard deviation of $\gamma_x$

The more uniform the flow velocity of the fluid at a cross-section of this porous body is, the greater (closer to 1) the value of the derived in-plane uniformity index $\gamma_X$ is, and the more variance there is in the flow velocity of the fluid at the cross-section is, the smaller the value is. Also, the smaller the variance in the in-plane uniformity index $\gamma_X$ derived for multiple cross-sections is, the greater the value of the spatial uniformity index $\gamma$ is, and the greater the variance is, the smaller the value is. The present inventors have found that when using a porous body for a filter, the greater the value of the in-plane uniformity index $\gamma_X$ is, the better the power drop properties are, and have found that when using a porous body for a filter, the greater the spatial uniformity index $\gamma$ is, the better the collection performance is. The present inventors have found that when the condition of the average value of multiple in-plane uniformity indices $\gamma_X$ being 0.6 or greater, and the spatial uniformity index $\gamma$ being 0.6 or greater is satisfied, pressure drop is sufficiently reduced and collection performance is sufficiently improved. The porous body according to the present invention satisfies these conditions so pressure drop is sufficiently reduced and collection performance is sufficiently improved. Portions of the pores (spaces) within the porous body where the flow velocity of the passing fluid is relatively small may not contribute much to transmittance of the fluid, which may lead to increased pressure drop, and deterioration in thermal conductivity and thermal capacity of the material. Also, portions where the velocity of the passing fluid is relatively great may exhibit great flow resistance when the fluid passes through, or the fluid may pass through in a short time and the pores do not contribute much to collecting performance. Accordingly, when the above conditions for the in-plane uniformity index $\gamma_X$ and the spatial uniformity index $\gamma$ are satisfied, there are few such portions where the flow velocity is relatively smaller or portions where the flow velocity is relatively great, so it can be conceived that satisfactory properties can be obtained. Also, with regard to the first porous body according to the present invention, porous body data in which is correlated position information and pixel type information is referenced to place multiple virtual curved surface bodies, made up of parent virtual spheres and child virtual spheres, so as to fill in space pixels with curved surface body pixels occupied by the multiple virtual curved surface bodies that are placed. Thus, spaces (pores) having complicated shapes within the porous body are substituted with virtual curved surface bodies formed by combining multiple shapes, so the space within the porous body can be simulated more precisely as a collection of multiple virtual curved surface bodies. Accordingly, it can be conceived that the precision of correlation between the in-plane uniformity index $\gamma_X$ and spatial uniformity index $\gamma$ derived using the information relating to the placed virtual curved surface bodies, and properties such as pressure drop and collection performance, is further improved.

In this case, with regard to placing one virtual curved surface body, in a case of placing multiple child virtual spheres, the multiple child virtual spheres are preferably permitted to overlap each other. Also, fluid analysis is preferably performed with regard to a fluid flowing from a predetermined inflow face to a predetermined outflow face of the porous body.

The first porous body according to the present invention may be formed such that, when deriving through-flow volume Q of the fluid per unit time at the virtual curved surface solid for each virtual curved surface solid, based on information relating to the placed virtual curved surface solids and information relating to the flow velocity vector for the each space pixel, and deriving flow-through velocity T of each virtual curved surface solid by $T = Q/(\pi d^2/4)$ based on the derived through-flow volume Q and an equivalent diameter d of the virtual curved surface solid (= 6 × volume V of virtual curved surface solid / surface area S of virtual curved surface solid), and

deriving a flow velocity ratio $T_f$ (=$T/T_{in}$) of the derived flow-through velocity T to an average flow velocity $T_{in}$ of the fluid at the inflow face in the fluid analysis, and performing classification such that, of the placed virtual curved surface solids, virtual curved surface solids which satisfy $T_f < 2$ are classified as low-flow-velocity curved surface solids, and virtual curved surface solids which satisfy $8 \le T_f$ as high-flow-velocity curved surface solids;

the percentage of the total value of volume of the low-flow-velocity curved surface solids as to the total value of volume of the plurality of virtual curved surface solids is 20% or less, and the percentage of the total value of volume of the high-flow-velocity curved surface solids as to the total value of volume of the plurality of virtual curved surface solids is 10% or less.

The present inventors have found that upon having derived the flow velocity ratio $T_f$ regarding each virtual curved surface body, the smaller the volume of a virtual curved surface body where the flow velocity ratio $T_f$ is relatively small, and the smaller the volume of a virtual curved surface body where the flow velocity ratio $T_f$ is relatively great, the better the pressure drop properties and collection performance is. The present inventors have also found that when the percentage by volume of low-flow-velocity curved surface solids which satisfy flow velocity ratio $T_f$ of $T_f < 2$ is 20% or less, and the percentage by volume of high-flow-velocity curved surface solids which satisfy flow velocity ratio $T_f$ of $8 \le T_f$ is 10% or less, the pressure drop is sufficiently reduced and collection performance is sufficiently improved. The porous body according to the present invention satisfies these conditions, so pressure drop is sufficiently reduced and collection performance is sufficiently improved. Now, pores of the porous body simulated with virtual curved surface solids of which the flow velocity ratio $T_f$ is relatively small may not contribute much to transmittance of the fluid, leading increased pressure drop, and deterioration in thermal conductivity and thermal capacity of the material. Also, pores of the porous body simulated with virtual curved surface solids of which the flow velocity ratio $T_f$ is great, may exhibit great flow resistance when the fluid passes through, or the fluid may pass through in a short time and the pores do not contribute much to collecting performance. When the percentage by volume of the total value of low-flow-velocity curved surface solids and the percentage by volume of the total value of high-flow-velocity curved surface solids satisfy the above conditions, such portions with relatively small flow velocity and relatively great flow velocity are few, which can be conceived to yield good properties.

The first porous body according to the present invention may be formed such that, when deriving an equivalent diameter d of each virtual curved surface solid by d = 6 × (volume V of virtual curved surface solid) / (surface area S of virtual curved surface solid) based on information relating to the placed virtual curved surface solids, and classifying virtual curved surface solids where the value of the derived equivalent diameter d satisfies 10 $\mu$m $\le$ d $\le$ 25 $\mu$m as mid-diameter curved surface solids;

the percentage of the total value of volume of the mid-diameter curved surface solids as to the total value of volume of the plurality of virtual curved surface solids is 60% or greater.

The present inventors have found that upon deriving the equivalent diameter d for each virtual sphere, the smaller the percentage by volume of small-diameter curved surface bodies where the equivalent diameter d is small and large-diameter curved surface bodies where the equivalent diameter d is great, that is to say, the greater the percentage by volume of mid-diameter curved surface bodies which are neither small-diameter curved surface bodies nor large-diameter curved surface bodies, the better the pressure drop properties and collection performance of the porous body tends to be. The present invention have also found that when the percentage by volume of mid-diameter curved surface solids satisfying 10 $\mu$m $\le$ d $\le$ 25 $\mu$m for the equivalent diameter d is 60% or more, pressure drop is sufficiently reduced and collection performance is sufficiently improved. The porous body according to the present invention satisfies these conditions so pressure drop is sufficiently reduced and collection performance is sufficiently improved. Now, regarding pores of the porous body simulated with virtual curved surface solids of which the equivalent diameter d is small, the flow velocity of the fluid passing through may be small, leading to increased pressure drop, or the catalyst applied to the walls of the pores to use the porous body as a filter may not be appropriately applied, or the like. Also, pores of the porous body simulated with virtual curved surface solids of which the equivalent diameter d is great, may result in the flow velocity of the fluid passing through being great to the point of not contributing to collecting performance very much when using the porous body as a filter. When the percentage of the total value of volume of mid-diameter curved surface solids satisfies the above condition, pores with such small equivalent diameters d and great equivalent diameters d are few, which can be conceived to yield good properties. In this case, the percentage of the total value of volume of the mid-diameter curved surface solids as to the total value of volume of the multiple virtual curved surface solids may be 70% or more. This further reduces pressure drop and further improves collection performance.

A second porous body according to the present invention is a porous body, wherein, when creating porous body data based on an image obtained by a 3-dimensional scan of the porous body, in which porous body data is correlated position information representing position of a pixel in the image, and pixel type information representing whether a space pixel representing that the pixel is space or a matter pixel representing that the pixel is matter,

performing a processing of placing, as to the porous body data, one parent virtual sphere having the greatest spherical diameter that can be placed so as to fill in the space pixels without overlapping with the matter pixel, placing at least one child virtual sphere such that the center of the child virtual sphere overlaps with the placed parent virtual sphere and pixels occupied by the child virtual sphere fill in the space pixels without overlapping with the matter pixel, and placing one virtual curved surface solid formed of the parent virtual sphere and the child virtual sphere so as to fill in the space pixels with curved surface solid pixels which are pixels occupied by the virtual curved surface solid, and repeating this processing such that pixels occupied by different virtual curved surface solids do not overlap each other, thereby placing a plurality of the virtual curved surface solids,

performing fluid analysis regarding a case of inflow of a fluid from a predetermined inflow face of the porous body by the lattice Boltzmann method based on the porous body data, and thereby deriving a flow velocity vector of the fluid for each space pixel at the time of the fluid passing through the porous body,

deriving through-flow volume Q of the fluid per unit time at the virtual curved surface solid for each virtual curved surface solid, based on information relating to the placed virtual curved surface solids and information relating to the flow velocity vector for the each space pixel, and deriving flow-through velocity T of each virtual curved surface solid by $T = Q/(\pi d^2/4)$ based on the derived through-flow volume Q and an equivalent diameter d of the virtual curved surface solid (= 6 $\times$ volume V of virtual curved surface solid / surface area S of virtual curved surface solid),

deriving a flow velocity ratio $T_f$ (=$T/T_{in}$) of the derived flow-through velocity T to an average flow velocity $T_{in}$ of the fluid at the inflow face in the fluid analysis, and performing classification such that, of the placed virtual curved surface solids, virtual curved surface solids where $T_f < 2$ are classified as low-flow-velocity curved surface solids, and virtual curved surface solids where $8 \leq T_f$ as high-flow-velocity curved surface solids;

the percentage of the total value of volume of the low-flow-velocity curved surface solids as to the total value of volume of the plurality of virtual curved surface solids is 20% or less, and the percentage of the total value of volume of the high-flow-velocity curved surface solids as to the total value of volume of the plurality of virtual curved surface solids is 10% or less.

In this porous body, the percentage by volume of low-flow-velocity curved surface solids which satisfy flow velocity ratio $T_f$ of $T_f < 2$ is 20% or less, and the percentage by volume of high-flow-velocity curved surface solids which satisfy flow velocity ratio $T_f$ of $8 \leq T_f$ is 10% or less. Therefore, for reasons described above, the pressure drop is sufficiently reduced and collection performance is sufficiently improved.

A third porous body according to the present invention is a porous body, wherein, when

creating porous body data based on an image obtained by a 3-dimensional scan of the porous body, in which porous body data is correlated position information representing position of a pixel in the image, and pixel type information representing whether a space pixel representing that the pixel is space or a matter pixel representing that the pixel is matter,

performing a processing of placing, as to the porous body data, one parent virtual sphere having the greatest spherical diameter that can be placed so as to fill in the space pixels without overlapping with the matter pixel, placing at least one child virtual spheres such that the center of the child virtual sphere overlaps with the placed parent virtual sphere and pixels occupied by the child virtual sphere fill in the space pixels without overlapping with the matter pixel, and placing one virtual curved surface solid formed of the parent virtual sphere and the child virtual sphere so as to fill in the space pixels with curved surface solid pixels which are pixels occupied by the virtual curved surface solid, and repeating this processing such that pixels occupied by different virtual curved surface solids do not overlap each other, thereby placing a plurality of the virtual curved surface solids,

deriving an equivalent diameter d of each virtual curved surface solid by 6 $\times$ (volume V of virtual curved surface solid) / (surface area S of virtual curved surface solid) based on information relating to the placed virtual curved surface solids, and classifying virtual curved surface solids where the value of the derived equivalent diameter d satisfies 10 $\mu$m $\leq$ d $\leq$ 25 $\mu$m as mid-diameter curved surface solids;

the percentage of the total value of volume of the mid-diameter curved surface solids as to the total value of volume of the plurality of virtual curved surface solids is 60% or greater.

In this porous body, the percentage of the total value of volume of the mid-diameter curved surface solids as to the total value of volume of the plurality of virtual curved surface solids is 60% or greater. Therefore, for reasons described above, the pressure drop is sufficiently reduced and collection performance is sufficiently improved. In this case, the percentage of the total value of volume of the mid-diameter curved surface solids as to the total value of volume of the plurality of virtual curved surface solids may be 70% or greater. With such structure, the pressure drop is further reduced and collection performance is further improved.

A honeycomb filter according to the present invention comprises a partition formed of the porous body according to the present invention of any structure described above, forming a plurality of cells of which one end is open and the other end is sealed and which serve as channels for a fluid.

In the porous body forming the honeycomb filter, the pressure drop is sufficiently reduced and collection performance is sufficiently improved. Therefore, the pressure drop is sufficiently reduced and collection performance is sufficiently improved when a fluid flows through the honeycomb filter.

A method according to the present invention is a method for manufacturing a porous body, comprising:

a raw material mixing step of mixing a base material made up of an inorganic material, and a pore-forming agent, to yield a green body; and

a molding-and- sintering step of obtaining a compact by molding the green body, and sintering the compact; wherein a (D90 - D10)/ D50 value of the base material is 2 or less, and a (D90 - D10)/ D50 value of the pore-forming agent is 2 or less, where D10 represents particle diameter that is 10% by volume, D50 represents particle diameter that is 50% by volume, and D90 represents particle diameter that is 90% by volume.

The present inventors have found that when manufacturing the porous body, the closer the particle diameter of the base material and the pore-forming agent is, i.e., the smaller the variance in the particle diameter of the base material and the pore-forming agent is, the further the pressure drop in the manufactured porous body is reduced and the greater the improvement in collection performance is. The present inventors have also found that by the value of (D90 - D10) / D50 of the base material being 2 or smaller, and value of (D90 - D10) / D50 of the pore-forming agent being 2 or smaller, the pressure drop in the manufactured porous body is sufficiently reduced and collection performance is sufficiently improved. The manufacturing method of the porous body according to the present invention satisfies these conditions, so a porous body with sufficiently reduced pressure drop and sufficiently improved collection properties can be obtained. Manufacturing the porous body by this manufacturing method enables manufacturing of a porous body which satisfies at least one condition of the three conditions of "the average value of multiple in-plane uniformity indices $\gamma_X$ is 0.6 or greater, and the spatial uniformity index $\gamma$ is 0.6 or greater", "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less", and "the percentage of the total value of volume of mid-diameter curved surface solids as to the total value of volume of multiple virtual curved surface solids is 60% or more". In this case, a dispersant may be mixed in the raw ingredient mixing procedure. The value of (D90 - D10) / D50 of the base material is preferably as small as possible, and for example is preferably 1.5 or smaller. The value of (D90 - D10) / D50 of the pore-forming agent also is preferably as small as possible, and for example is preferably 1.5 or smaller. Now, the term that D10 of the base material, which is to say the particle diameter that is 10% by volume, is a value 20 $\mu$m, means that the total volume of particles of which the particle diameter is 20 $\mu$m or smaller occupies 10% of the total volume of all particles of the base material. This is the same for D50 and D90 as well. Note that D50 is a value equivalent to the average particle diameter.

Brief Description of Drawings

Fig. 1 is a frontal diagram of the honeycomb filter 30 including a porous partition 44.

Fig. 2 is a cross-sectional view taken along A-A in Fig. 1.

Fig. 3 is a configuration diagram of a user personal computer 20 serving as a microstructure analysis device.

Fig. 4 is a conceptual diagram of porous body data 60.

Fig. 5 is an explanatory diagram of porous body data 60.

Fig. 6 is a flowchart illustrating an example of an analysis processing routine.

Fig. 7 is a flowchart illustrating an example of virtual curved surface solid placement processing.

Fig. 8 is an explanatory diagram illustrating an example of a virtual curved surface solid table 83.

Fig. 9 is an explanatory diagram of placement of a parent virtual sphere.

Fig. 10 is an explanatory diagram of placement of child virtual spheres and a virtual curved surface solid.

Fig. 11 is a graph illustrating the average value of in-plane uniformity index $\gamma_X$ in Examples 1 and 2.

Fig. 12 is a graph illustrating the value of spatial uniformity index $\gamma$ in Examples 1 and 2.

Fig. 13 is a graph illustrating classification of virtual curved surface solids by flow velocity ratio $T_f$ (= $T/T_{in}$) in Examples 1 and 2.

Fig. 14 is a graph illustrating summary results of pore diameter (equivalent diameter d) of porous partitions in the Examples 1 and 2.

Fig. 15 is a graph illustrating classification of virtual curved surface solids in Examples 1 and 2 by equivalent diameter d.

Description of Embodiments

Next, an embodiment of the present invention will be described with reference to the drawings.

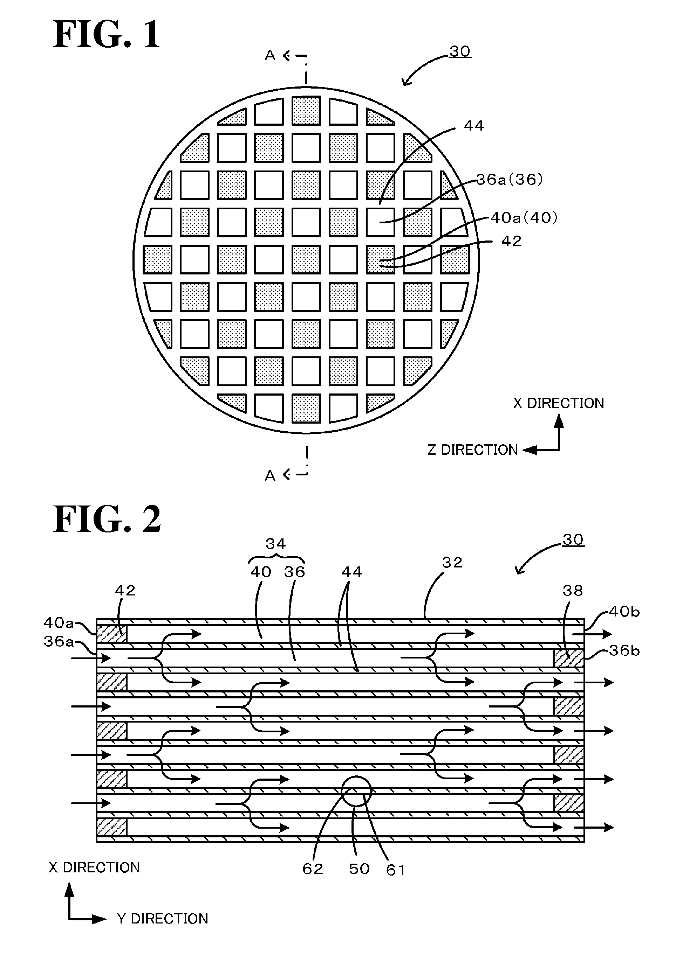

Fig. 1 is a frontal view of a honeycomb filter 30 including a porous partition 44 which is a porous body according to an embodiment of the present invention, and Fig. 2 is a cross-sectional diagram taken along line A-A in Fig. 1. The honeycomb filter 30 is a diesel particulate filter (DPF) having a function of filtering particulate matter (PM) in exhaust gas from a diesel engine. This honeycomb filter 30 has multiple cells 34 (see Fig. 2) sectioned by porous partitions 44, with an external protective portion 32 formed on the perimeter thereof. The porous partitions 44 may be formed including one or more inorganic materials selected from Cordierite, Si-bonded SiC, recrystallized SiC, aluminum titanate, mullite, silicon nitride, sialon, zirconium phosphate, zirconia, titania, alumina, and silica, for example. Of these, ceramic materials such as Si-bonded SiC, recrystallized SiC, Cordierite, and so forth are preferably used, from the perspective of strength and heat resistance. The thickness of the porous partition 44 is preferably 200 $\mu$m to less than 600 $\mu$m, and is 300 $\mu$m in the present embodiment. The porous partition 44 has an average pore diameter (by mercury intrusion) of 10 $\mu$m to less than 60 $\mu$m, and porosity (voidage) of 40% to less than 65%. The great number of cells 34 formed in the honeycomb filter 30 by the porous partition 44 have one end open and the other end sealed off and serve as channels for a fluid. These cells 34 include inlet-opened cells 36 of which the inlet 36a is open and the outlet 36b has been sealed by an outlet sealant 38, and outlet-opened cells 40 of which an inlet 40a is sealed by an inlet sealant 42 and an outlet 40b is open, as illustrated in Fig. 2. These inlet-opened cells 36 and outlet-opened cells 40 are arrayed so as to be alternatingly adjacent. Cell density is, for example, 15 cells/cm$^2$ to less than 65 cells/cm$^2$. The external protective portion 32 is a layer for protecting the outer periphery of the honeycomb filter 30, and may include the above-described inorganic particles, aluminosilicate, alumina, silica, zirconia, ceria, mullite, and like inorganic fibers, and colloidal silica, clay, and like binders.

This honeycomb filter 30 is installed downstream of a diesel engine not illustrated in the drawings, for example, and is used to purge exhaust gas including PM so as to be discharged into the atmosphere. Note that the arrow in Fig. 2 illustrates the flow of exhaust gas at this time. The exhaust gas including PM from the diesel engine flows into inlet-opened cells 36 from the inlets 36a of the honeycomb filter 30, and then flows into adjacent outlet-opened cells 40 through the porous partitions 44, so as to be discharged from the outlets 40b of the outlet-opened cells 40 into the atmosphere. Since the PM is collected as the exhaust gas including PM flows through the porous partitions 44 from the inlet-opened cells 36 to the outlet-opened cells 40, the exhaust gas flowing into the outlet-opened cells 40 is thus clean exhaust gas not including PM. The insides of the pores in the porous partition 44 are coated with an oxidation catalyst such as platinum or the like, which is not illustrated in the drawings, which oxidizes the collected PM so as to prevent deterioration in porosity of the porous partition 44 and sudden increase in pressure drop.

The porous partition 44 according to the present embodiment satisfies at least one of the following three conditions when the later-described microstructure of the porous body making up the porous partition 44 is analyzed; "the average value of multiple in-plane uniformity indices $\gamma_X$ is 0.6 or greater, and the spatial uniformity index $\gamma$ is 0.6 or greater", "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less", and "the percentage of the total value of volume of mid-diameter curved surface solids as to the total value of volume of multiple virtual curved surface solids is 60% or more". A method to analyze the microstructure will be described next.

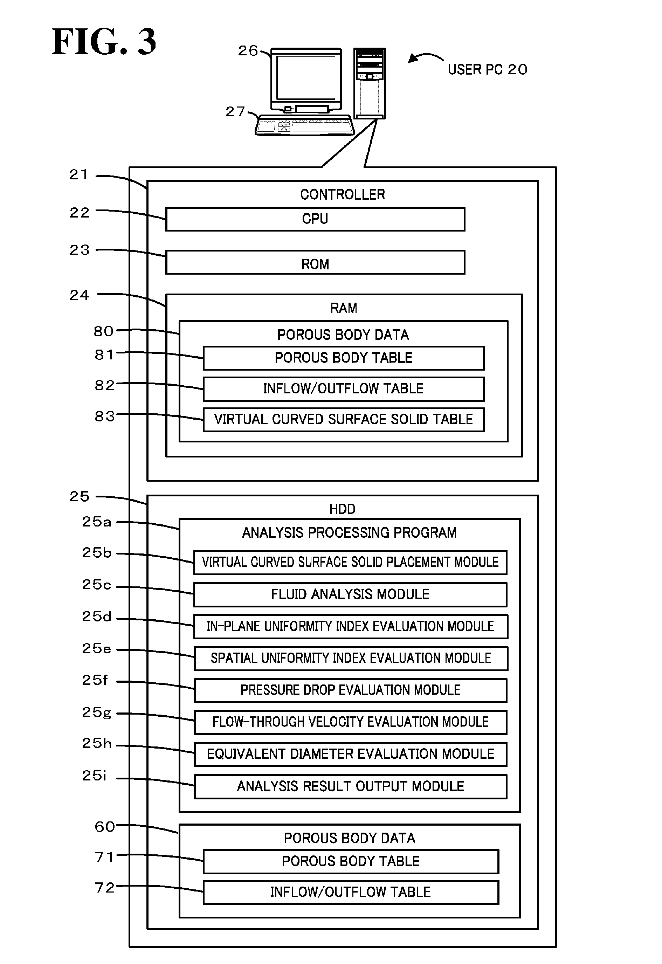

Fig. 3 is a configuration diagram schematically illustrating the configuration of a user personal computer (PC) 20 configured as a microstructure analysis device to perform microstructure analysis of the porous partition 44. This user PC 20 has a controller 21 including a CPU 22 which executes various types of processing, ROM 23 which stores various types of processing programs and so forth, RAM 24 which temporarily stores data, and so forth, and a HDD 25 which is large-capacity memory to store various types of data such as various types of processing programs such as an analysis processing program 25a and porous body data 60 which is 3-dimensional pixel data of porous body and so forth. Note that the user PC 20 has a display 26 for displaying various types of information on a screen, and an input device 27 such as a keyboard for a user to input various types of commands. The porous body data 60 stored in the HDD 25 includes a porous body table 71 and an inflow/outflow table 72, whereby the user PC 20 can analyze microstructures of porous body based on the porous body data 60 stored in the HDD 25, which will be described in detail later. Also, in the process of analyzing microstructures, the RAM 24 stores porous body data 80. The porous body data 80 includes a porous body table 81, an inflow/outflow table 82, and a curved surface solid table 83, which will be described in detail later.

The HDD 25 of the user PC 20 stores 3-dimensional pixel data of the porous partitions 44 obtained by performing a CT scan on this honeycomb filter 30, as porous body data 60. With the present embodiment, an X-Y plane indicated by the X direction and Y direction in Fig. 2 is the cross-sectional plane to be photographed, and a CT scan is taken by photographing multiple cross-sections along the Z direction in Fig. 1, thereby obtaining pixel data. With the present embodiment, the resolution in each of the X, Y, and Z directions is 1.2 $\mu$m, so a cube having a size of 1.2 $\mu$m in all dimensions is the smallest unit of the 3-dimensional pixel data, i.e., a pixel. The resolution in each of the X, Y, and Z directions may be set as appropriate, depending on the performance of the CT imaging device, the size of the particles to be analyzed, and so forth. Also, the resolution may be of different values in each direction. While not restrictive in particular, the resolution in each of the X, Y, and Z directions may be set to any value within a range of, for example, 0.5 μm to 3.0 μm. The position of each pixel is expressed by XYZ coordinates (the coordinate value 1 corresponds to 1.2 μm, which is the length of each side of a pixel), and type information determining whether or not that pixel is space (pore) or matter (constituent material of porous partition 44) is added thereto, and the position and the type information are stored in the HDD 25. With the present embodiment, a value 0 is added as type information for pixels representing space (space pixels), and a value 9 is added as type information for pixels representing matter (matter pixels). Note that in reality, the data obtained by the CT scan is luminance data for each XYZ coordinate, for example. The porous body data 60 used with the present embodiment can be obtained by binarizing this luminance data at a predetermined threshold to determine whether a space pixel or matter pixel, for each coordinate. The predetermined threshold is a value set as a value capable of suitably distinguishing between space pixels and matter pixels. This threshold may be determined by experiment beforehand, so that the porosity of the porous partition 44 obtained by measurement, and the porosity in the pixel data after binarization, are approximately equal. This CT scan can be performed using an SMX-160CT-SV3, manufactured by Shimadzu Corporation, for example.

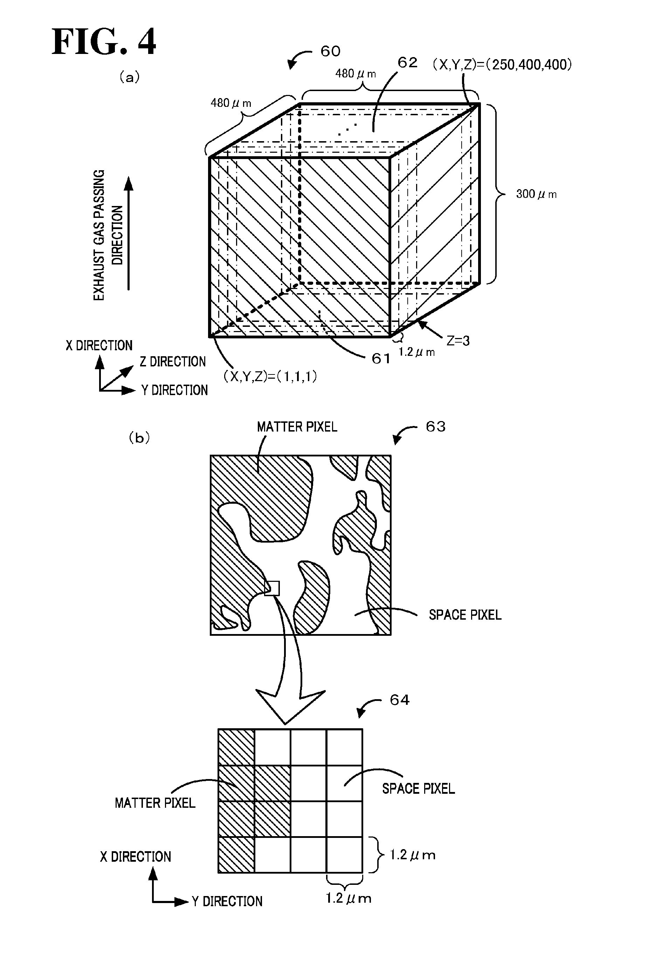

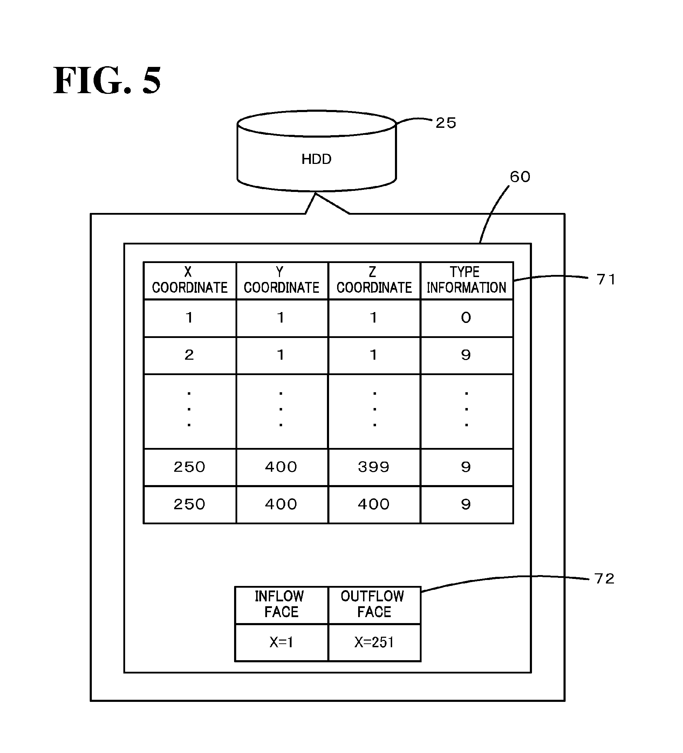

Fig. 4 is a conceptual diagram of the porous body data 60. Fig. 4(a) is a conceptual diagram of the porous body data 60 obtained as pixel data by performing a CT scan of the porous partition 44 in region 50 in Fig. 2. With the present embodiment, this porous body data 60 is extraction of pixel data of a cuboid portion from the pixel data of the porous partition 44, of a cuboid having a size of 300 μm (= 1.2 μm × 250 pixels) which is the same value as the thickness of the porous partition 44 in the direction of exhaust gas passing through, in the X direction, 480 μm (= 1.2 μm × 400 pixels) in the Y direction, and 480 μm (= 1.2 μm × 400 pixels) in the Z direction. The later-described analysis processing is performed on this porous body data 60. The size of the porous body data 60 can be set as appropriate depending on the thickness and size of the porous partition 44, allowable calculation load, and so forth. For example, the length in the X direction is not restricted to 300 μm and may be any value, as long as the same value as the thickness of the porous partition 44 in the direction of exhaust gas passing through. Also, while length in the X direction is preferably the same value as the thickness of the porous partition 44 in the direction of exhaust gas passing through, it does not have to be the same value. The lengths in the Y direction and Z direction also are not restricted to 480 μm and may be other values, and the length in the Y direction and the Z direction may be different. Each of the lengths in the X direction, the Y direction, and Z direction is preferably 180 μm or more, so as to reduce variation of results depending on pixel data of the porous partition portion 44. Two faces of the six faces of the cuboid porous body data 60 (faces parallel to the Y-Z plane) are an inflow face 61 (see Fig. 2) which is the boundary face between the porous partition 44 and inlet-opened cell 36, and an outflow face 62 (see Fig. 2) which is the boundary face between the porous partition 44 and outlet-opened cell 40 in the region 50, and the remaining four faces are cross-sections of the porous partition 44. Fig. 4(b) is the X-Y plane (photography cross-section) 63 at the position in the porous body data 60 where the Z coordinate is value 3, and an enlarged diagram 64 of a part thereof. As illustrated in the enlarged diagram 64, the X-Y plane 63 is configured of an array of pixels of which each side is 1.2 μm, with each pixel being represented as being either a space pixel or a matter pixel. Note that while the photographed cross-section obtained by the CT scan is planar data with no thickness in the Z direction as illustrated in Fig. 4(b), each photographed cross-section is handled as having the thickness of the intervals between photographed cross-sections in the Z direction (1.2 μm), i.e., as each pixel being a cube of which each side is 1.2 μm, as described above. The porous body data 60 is stored in the HDD 25 as data including a porous body table 71 correlating the XYZ coordinates serving as position information for each pixel with the type information, and an inflow/outflow table 72 representing the inflow face 61 and outflow face 62, as illustrated in Fig. 5. In Fig. 5, the "X=1" in the inflow/outflow table 72 means the plane X=1 on the XYZ coordinate system, and represents the inflow face 61 illustrated in Fig. 4(a). "X=251" represents the outflow face 62 in the same way.

The analysis processing program 25a includes a virtual curved surface solid placement module 25b, a fluid analyzing module 25c, an in-plane uniformity index evaluation module 25d, a spatial uniformity index evaluation module 25e, a pressure drop evaluation module 25f, a flow-through velocity evaluation module 25g, an equivalent diameter evaluation module 25h, and an analysis result output module 25i. The virtual curved surface solid placement module 25b has a function of referencing the porous body data 80, taking a curved surface solid including a parent virtual sphere and one or more child virtual spheres partially overlapping the parent virtual sphere with regard to occupied pixels, as a virtual curved surface solid, and placing multiple virtual curved surface solids so as to fill in space pixels with curved surface solid pixels which are pixels occupied by virtual curved surface solids. The fluid analyzing module 25c has a function of deriving information relating to the flow of fluid for each space pixel at the time of the fluid passing through the interior of the porous body, by performing fluid analysis based on the porous body data 80. The in-plane uniformity index evaluation module 25d has a function of deriving one or more in-plane uniformity index $\gamma_X$ of flow velocity at a cross-section parallel to the inflow face 61 of the porous body data 80, based on information relating to the virtual curved surface solid placed by the virtual curved surface solid placement module 25b and information relating to flow that has been derived by the fluid analyzing module 25c, and evaluating the porous body based on the in-plane uniformity index

$\gamma_x$. The spatial uniformity index evaluation module 25e has a function of deriving a spatial uniformity index $\gamma$ of the flow velocity at the porous body using the in-plane uniformity index $\gamma_x$ derived by the in-plane uniformity index evaluation module 25d, and evaluating the porous body based on the in-plane uniformity index $\gamma_x$. The pressure drop evaluation module 25f has functions of deriving pressure drop P per unit thickness of the porous body using the in-plane uniformity index $\gamma_x$ derived by the in-plane uniformity index evaluation module 25d, and evaluating the porous body based on the pressure drop P. The flow-through velocity evaluation module 25g has functions of deriving flow-through velocity T and flow velocity ratio $T_f$ for each virtual curved surface solid, based on information relating to position of virtual curved surface solids placed by the virtual curved surface solid placement module 25b and information relating to the flow derived by the fluid analyzing module 25c, classifying the virtual curved surface solids based on the flow-through velocity T and flow velocity ratio $T_f$, and evaluating the porous body based on the classification results. The equivalent diameter evaluation module 25h has functions of deriving equivalent diameter d of the virtual curved surface solids placed by the virtual curved surface solid placement module 25b, classifying the virtual curved surface solids based on the equivalent diameter d, and evaluating the porous body based on the classification results. The analysis result output module 25i has a function of compiling the various types of values and evaluation results and so forth that have been derived, and outputting to store such values and evaluation results in the HDD 25 as analysis result data. The controller 21 executing the analysis processing program 25a realizes the above-described functions of the virtual curved surface solid placement module 25b, fluid analyzing module 25c, in-plane uniformity index evaluation module 25d, spatial uniformity index evaluation module 25e, pressure drop evaluation module 25f, flow-through velocity evaluation module 25g, equivalent diameter evaluation module 25h, and analysis result output module 25i.

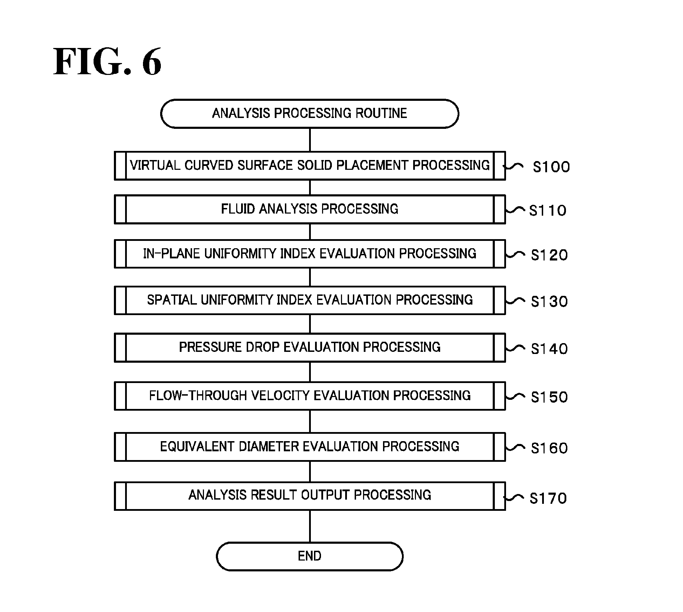

Next, the analysis processing which the user PC 20 performs with regard to the porous body data 60 will be described. Fig. 6 is a flowchart of an analysis processing routine. This analysis processing routine is carried out by the CPU 22 executing the analysis processing program 25a stored in the ROM 23 upon the user giving an instruction via the input device 27 to perform analysis processing. Note that while a case of performing analysis processing on the porous body data 60 will be described hereinafter, analysis processing can be performed on other porous body data in the same way. Which porous body data is to be analyzed may be determined beforehand, or may be specified by the user.

Upon the analysis processing routine being executed, the CPU 22 first executes curved surface solid placement processing, which is processing to place virtual curved surface solids so as to fill in space pixels in the porous body data 60 (step S100).

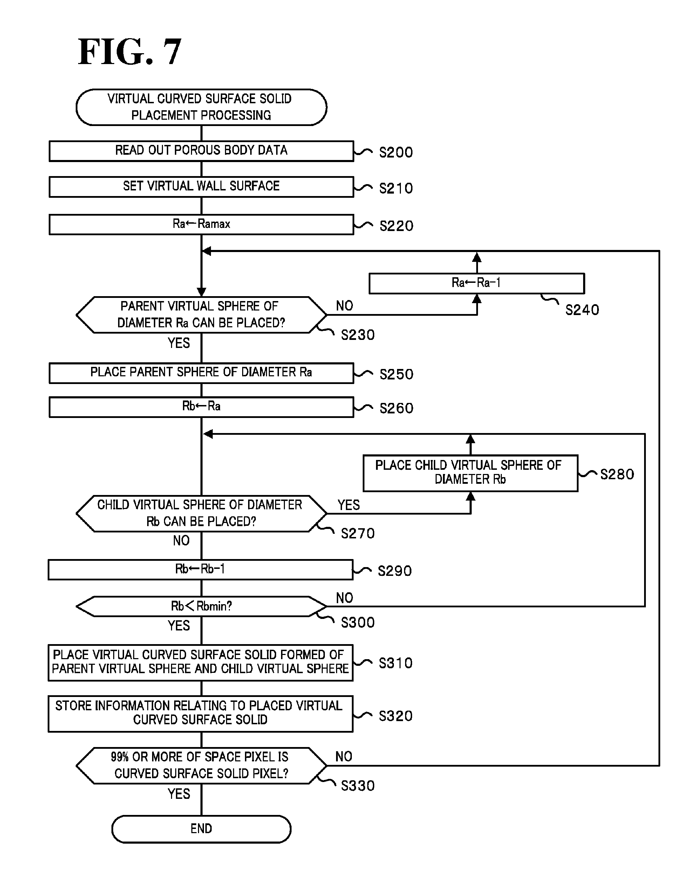

Now, we will depart from description of the analysis processing routine to describe the virtual curved surface solid placement processing. Fig. 7 is a flowchart of the virtual curved surface solid placement processing. This virtual curved surface solid placement processing is performed by the virtual curved surface solid placement module 25b. Upon the virtual curved surface solid placement processing being executed, the virtual curved surface solid placement module 25b first reads out the porous body data 60 stored in the HDD 25 and stores the readout data in the RAM 24 (step S200). Thus, the same data as the porous body data 60 including the porous body table 71 and inflow/outflow table 72 stored in the HDD 25 is stored in the RAM 24 as the porous body data 80 including the porous body table 81 and inflow/outflow table 82. Setting of virtual wall faces is performed regarding the porous body data 80 that has been read out (step S210). Specifically, based on the porous body data 80 which is a cuboid 300 $\mu$m $\times$ 480 $\mu$m $\times$ 480 $\mu$m, the user specifies the distance therefrom to a virtual wall face covering the periphery thereof by way of the input device 27, which the virtual curved surface solid placement module 25b accepts and stores in the RAM 24. For example, if the distance to the virtual wall face is specified as being 1 $\mu$m, the virtual curved surface solid placement module 25b presumes that there is a virtual wall face 1 $\mu$m on the outer side of each face of the porous body data 80 in the X, Y, and Z directions, and that the outer side thereof has all matter pixels placed thereat. That is to say, the porous body data 80 is a 300 $\mu$m $\times$ 480 $\mu$m $\times$ 480 $\mu$m cuboid, so this is presumed to be covered with a cuboid virtual wall face that is 302 $\mu$m $\times$ 482 $\mu$m $\times$ 482 $\mu$m. This virtual wall is set to restrict regions where virtual curved surface solids (parent virtual spheres and child virtual spheres) described later can be placed.

Next, the virtual curved surface solid placement module 25b sets a maximum value Ramax for the diameter Ra of the parent virtual sphere (step S220), and determines whether or not a parent virtual sphere of diameter Ra can be placed in the space pixels on the inner side of the virtual wall face set in step S210 (step S230). A parent virtual sphere with a diameter Ra is a virtual sphere having a size of a diameter of Ra ($\mu$m), with the center thereof at the center of one of the pixels. Whether or not this parent virtual sphere of diameter Ra can be placed is determined as follows, for example. First, any one pixel of space pixels (pixels of which the type information is value 0) at that point-in-time is selected. In the event that placing the parent virtual sphere of diameter Ra centered on the selected pixel causes the parent virtual sphere to overlap with a matter pixel or a virtual curved surface solid already placed, another space pixel is selected again as the center. One space pixel after another is selected, and in the event that the parent virtual sphere does not overlap a matter pixel or a virtual curved surface solid already placed, it is determined that the parent virtual sphere of diameter Ra can be placed at that position. In the event that the parent virtual sphere overlaps a matter pixel or a virtual curved surface solid already placed regardless of every space pixel being selected as the center at that point-in-time, it is determined that the parent virtual sphere of diameter Ra cannot be placed. Note that the order of selecting pixels to serve as a center may be random, or may be performed in order from pixels on the inflow face 61 toward pixels on the outflow face 62. Also, the value of the maximum value Ramax may be any value as long as a value equal to or greater than the maximum value of the diameter of pores normally present in the porous partition 44, and for example, the value can be set by reference to a value obtained beforehand by experiment. When it is determined in step S230 that the parent virtual sphere cannot be placed, the value of diameter R is decremented by 1 (step S240), and the processing of step S230 and thereafter is performed. Note that while the value to be decremented is 1 with the present embodiment, this may be set as appropriate according to the allowable calculation load and so forth.

When it is determined in step S230 that the parent virtual sphere can be placed, one parent virtual sphere of diameter Ra is placed at that position (step S250). Specifically, the type information corresponding to the pixel occupied by the parent virtual sphere when the parent virtual sphere of diameter Ra is placed, in the porous body table 71 of the porous body data 80 stored in the RAM 24 in step S200, is updated to a value 3 which represents a pixel occupied by a parent virtual sphere. Note that the type information of a pixel, the center of which is included in the parent virtual sphere, is updated to the value 3 with the present embodiment. This holds true for pixels occupied by later-described child virtual spheres as well.

Next, the virtual curved surface solid placement module 25b sets a diameter Rb of a child virtual sphere to the same value as the diameter Ra (step S260), and determines whether or not a child virtual sphere of a diameter Rb can be placed in the space pixels on the inner side of the virtual wall face set in step S210 (step S270). A child virtual sphere with a diameter Rb is a virtual sphere having a size of a diameter of Rb ($\mu$m), with the center thereof at the center of one of the pixels, and with a part of the occupied pixels overlapping pixels of the parent virtual sphere. Also, the placement of the child virtual spheres is performed such that the center of the child virtual sphere overlaps the parent virtual sphere placed in step S250. Determination of whether or not this child virtual sphere of a diameter Rb can be placed is performed as follows, for example. First, any one pixel of pixels which the parent virtual sphere occupies at that point-in-time (a pixel with a type information value is 3) is selected. In the event that placing the child virtual sphere of diameter Rb centered on the selected pixel causes the child virtual sphere to overlap with a matter pixel or a virtual curved surface solid already placed, another pixel occupied by the parent virtual sphere is selected again as the center. One pixel after another is selected, and in the event that the child virtual sphere does not overlap a matter pixel or a virtual curved surface solid already placed, it is determined that the child virtual sphere of diameter Rb can be placed at that position. In the event that the child virtual sphere overlaps a matter pixel or a virtual curved surface solid already placed regardless of every pixel occupied by the parent virtual sphere being selected as the center at that point-in-time, it is determined that the child virtual sphere of diameter Rb cannot be placed.

When it is determined in step S270 that the child virtual sphere can be placed, one child virtual sphere of diameter Rb is placed at that position (step S280). Specifically, of the porous body table 81 of the porous body data 80 stored in the RAM 24 in step S200, the type information corresponding to the pixel occupied by the child virtual sphere when the child virtual sphere of diameter Rb is placed is updated to a value 4 which represents a pixel being occupied by a child virtual sphere.

Note that no updating of type information is performed for pixels with type information of value 3, which are pixels occupied by the parent virtual sphere. That is to say, pixels where the parent virtual sphere and child virtual sphere overlap are correlated with the type information of the parent virtual sphere. Upon having placed one child virtual sphere, the processing of step S270 and thereafter is performed, and step S280 is repeated and child virtual spheres of diameter Rb are placed until it is determined that no child virtual sphere of diameter Rb can be placed. Note that mutual overlapping of child virtual spheres is permitted. That is to say, overlapping of pixels which one child virtual sphere occupies and pixels which another child virtual sphere occupies is permitted.

When it is determined in step S270 that no child virtual sphere can be placed, the value of diameter Rb is decremented by 1 (step S290), and it is determined whether or not the diameter Rb is smaller than the minimum value Rbmin (step S300). When the diameter Rb is equal to or greater than the minimum value Rbmin, the processing of step S270 and thereafter is performed. The minimum value Rbmin is the lower limit value of the diameter Rb of the child virtual sphere, and is a threshold determined to prevent placement of child virtual spheres with relatively small diameters that would not affect the analysis results very much, for example. With the present embodiment, Rbmin is 2 $\mu$m.

When the diameter Rb is smaller than the minimum value Rbmin in step S300, a virtual curved surface solid formed of the parent virtual sphere placed in step S250 and child virtual spheres placed in step S280 (step S310). Specifically, of the porous body table 81 of the porous body data 80 stored in the RAM 24 in step S200, the type information corresponding to the pixels occupied by the parent virtual sphere (pixels of type information is value 3) and the pixels occupied by the child virtual sphere (pixels of type information is value 4) are updated to a value 5 which represents a pixel of a curved surface solid pixel occupied by the virtual curved surface solid. Also, an identification symbol of the virtual curved surface solid is correlated with the position information of the curved surface solid pixels updated to the value 5 this time. The identification symbol of the virtual curved surface solid is a value given to each virtual curved surface solid in accordance with the order of being placed, for example, and curved surface solid pixels configuring one virtual curved surface solid have the same identification symbol correlated therewith. Information relating to this virtual curved surface solid is stored in the RAM 24 (step S320), it is determined whether or not 99% or more of space pixels have been replaced with the curved surface solid (step S330). This determination is made specifically by referencing the type information of each pixel included in the porous body table 71 stored in the RAM 24, and determining whether or not the number of pixels of which the type information of value 5 is 99% or more of the total number of pixels, of the number of pixels of which the type information is of value 0 and the number of pixels of which the type information is of value 5. The determination threshold is not restricted to 99%, and that other values may be used. When it is determined in step S330 that less than 99% of space pixels have been replaced with the curved surface solid, processing of step SS230 and thereafter is performed, so as to place the next virtual curved surface solid. On the other hand, when it is determined in step S330 that 99% or more of space pixels have been replaced with the curved surface solid, the virtual curved surface solid placement processing ends.

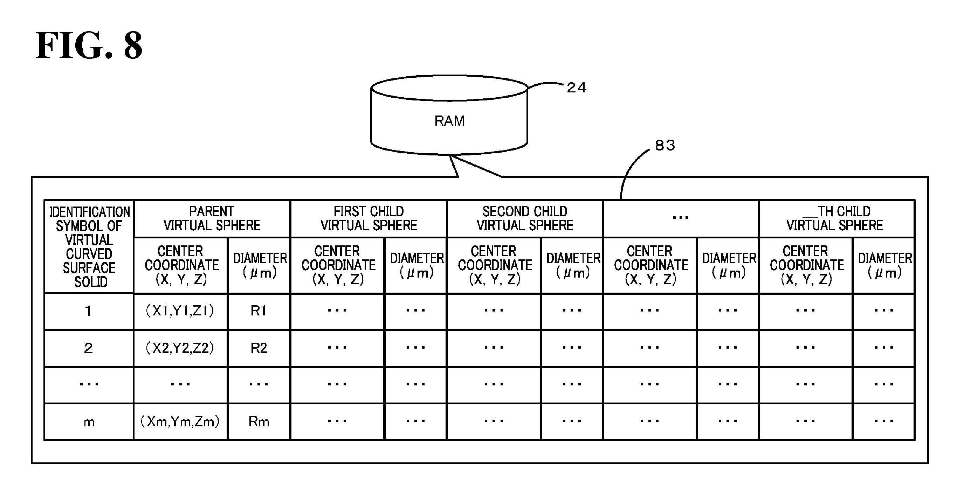

Note that in step S320, a virtual curved surface solid table 83 is stored in the RAM 24, as part of the porous body data 80. In the virtual curved surface solid table 83, as information relating to the virtual curved surface solid, an identification symbol identifying the virtual curved surface solid, the center coordinates (X, Y, Z) and diameter of the parent virtual sphere configuring the virtual curved surface solid, and the center coordinates and diameter of the one or more child virtual spheres configuring the virtual curved surface solid, are correlated. Fig. 8 illustrates an example of the virtual curved surface solid table 83. As illustrated in the drawing, the virtual curved surface solid table 83 has correlated therein for each of the multiple virtual curved surface solids placed by repeating steps S230 through S320, an identification symbol, the center coordinates and diameter of the parent virtual sphere, and the center coordinates and diameter of the one or more child virtual spheres configuring the virtual curved surface solid. Also, since there are cases where multiple child virtual spheres exist for a single virtual curved surface solid, information of multiple child virtual spheres is correlated in an identifiable manner, such as first child virtual sphere, second child virtual sphere ..., in accordance with the order of placement, for example. Note that a virtual curved surface solid in which not a single child virtual sphere exists, i.e., a virtual curved surface solid configured of a parent virtual sphere alone, is allowable.

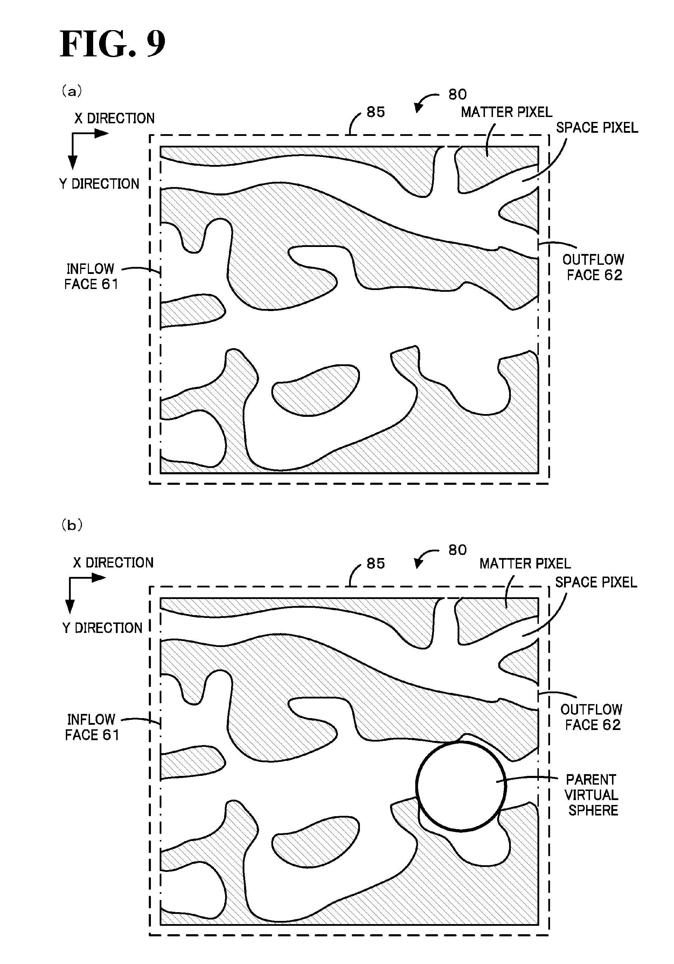

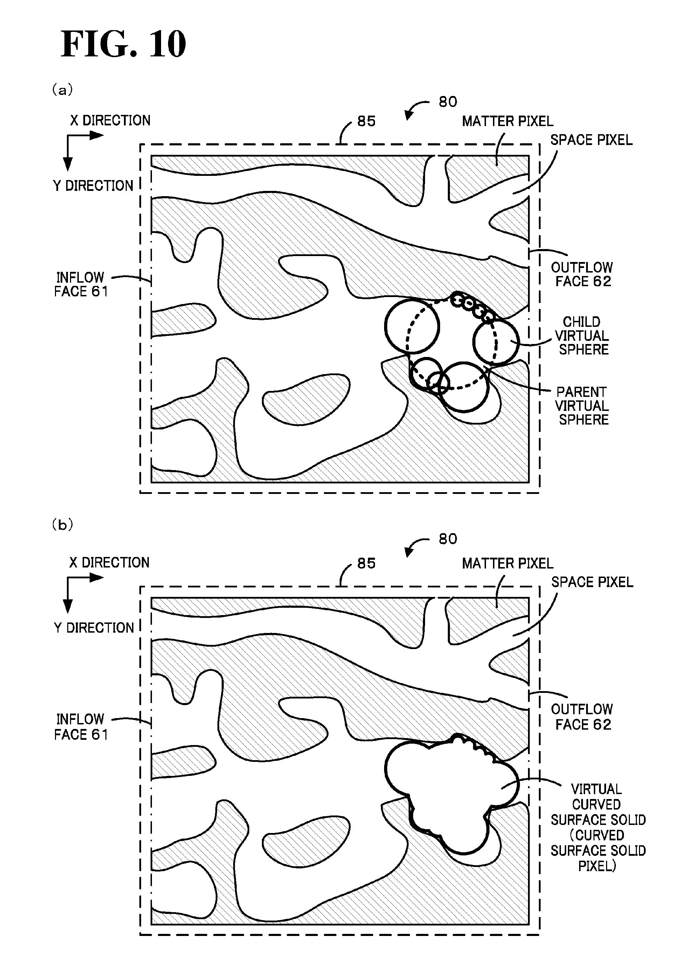

According to this virtual curved surface solid placement processing, the virtual curved surface solid table 83 is stored in the RAM 24, and also the space pixels are replaced with curved surface solid pixels by the virtual curved surface solid that has been placed. Now, the way in which one virtual curved surface solid made up of a parent virtual sphere and child virtual spheres is placed by the virtual curved surface solid placing processing will be described. Fig. 9 is an explanatory diagram of placement of a parent virtual sphere, and Fig. 10 is an explanatory diagram of placement of child virtual spheres and a virtual curved surface solid. Note that Figs. 9 and 10 illustrate, of the porous body data 80, the appearance of a cross-section parallel to the X direction, with placement of the virtual curved surface solid being illustrated two-dimensionally, to facilitate description. Fig. 9(a) is an explanatory diagram illustrating an example of the porous body data 80 immediately after having performed step S210, and before placing the virtual curved surface solid, and Fig. 9(b) is an explanatory diagram illustrating a state in which one parent virtual sphere has been placed. Fig. 10(a) is an explanatory diagram of a state where multiple child virtual spheres have been placed with respect to the parent virtual sphere that has been placed in Fig. 9(b). Fig. 10(b) is an explanatory diagram of a state where a virtual curved surface solid made up of the parent virtual sphere and child virtual spheres has been placed. As illustrated in Fig. 9(a), the porous body data 60 is made up of matter pixels and space pixels, with the inflow face 61, outflow face 62, and a virtual wall face 85 having been set. The virtual curved surface solid (parent virtual sphere, child virtual sphere) is placed so as to not extend outside from the virtual wall face 85. The processing of steps S220 through S250 is performed while decrementing the value of the diameter Ra 1 at a time from a sufficiently great value, and when the diameter Ra is equal to the greatest diameter which can be placed in the porous body data 80 in a range of not overlapping a matter pixel and not protruding outside from the virtual wall face 85, one parent virtual sphere is placed (Fig. 9(b)). Next, steps S270 through S300 are repeated until the diameter Rb is determined in step S300 to be smaller than the minimum value Rbmin, whereby multiple child virtual spheres of various sizes of the diameter are placed so as to fill in the space pixels with the centers of the child virtual spheres overlapping the parent virtual sphere and with pixels which the child virtual spheres occupy not overlapping with matter pixels (Fig. 10(a)). When it is determined in step S300 that the diameter Rb is smaller than the minimum value Rbmin, one virtual curved surface solid made up of the parent virtual sphere and the child virtual spheres placed so far is placed (Fig. 10(b)). The processing of steps S230 through S320 to place one virtual curved surface solid in this way is repeated until it is determined in step S330 that, of the space pixels, the pixels replaced by curved surface solid pixels is 99% or more, whereby virtual curved surface solids are sequentially placed in other space pixels where a virtual curved surface solid is not yet placed, thereby filling up the space pixels with curved surface solid pixels. Thus, space (pores) having complicated shapes within the porous body are replaced with virtual curved surface solids of shapes having multiple spheres combined, so space within a porous body can be better simulated as a group of multiple virtual curved surface solids.

The description now returns to the analysis processing routine in Fig. 6. Upon the virtual curved surface solid placement processing of step S100 ending, the fluid analyzing module 25c performs fluid analysis processing to derive information relating to the flow of a fluid per space pixel at the time of a fluid passing through the interior of the porous body, by performing fluid analysis based on the porous body data 80 stored in the RAM 24 (step S110). This fluid analysis processing is performed by the lattice Boltzmann method. Specifically, the centers of the pixels of the porous body data 80 are taken as the lattice points, and fluid analysis is performed by the lattice Boltzmann method using a predetermined relational expression relating to the flow of fluid between each lattice point and adjacent lattice points, regarding a case of a fluid flowing in from the inflow face 61. A flow velocity vector made up of flow velocity and flow direction for each space pixel in the porous body data 80 is derived as information relating to the flow of the fluid at each space pixel, and the flow velocity vectors of each space pixel are stored in the porous body table 81 of the porous body data 80 in the RAM 24 in a correlated manner. Note that numerical values necessary of this fluid analysis, such as the average flow velocity $T_{in}$ of the fluid at the inflow face 61, viscosity $\mu$ of the fluid, density $\rho$ of the fluid, and so forth, are set in the analysis processing program 25a beforehand for example, and these numerical values are used to perform the analysis. These numerical values may be set by the user by way of the input device 27. Note that the average flow velocity $T_{in}$ is the average value of the flow velocity immediately prior to the fluid entering the porous body, and corresponds to the initial value of the flow velocity in fluid analysis. With the present embodiment, the average flow velocity $T_{in}$ is set to 0.01 m/s. Also, air of 0°C and 1 atm is assumed as the fluid, with a viscosity $\mu$ of $1.73 \times 10^{-5}$ [Pa·s], and density $\rho$ of 1.25 [kg/m$^3$]. Note that the fluid analysis processing in step S110 does not take into consideration the virtual curved surface solid placed in step S100, and is performed as if curved surface solid pixels are also space pixels.

Next, the in-plane uniformity index evaluation module 25d performs in-plane uniformity index evaluation processing (step S120). In the in-plane uniformity index evaluation processing, an in-plane uniformity index $\gamma_x$ is derived, and acceptability determination is made based on the derived value to evaluate the porous body. The in-plane uniformity index $\gamma_x$ is derived from the following Expression (1) as a value at a section specified as a cross-section parallel to the inflow face 61. Note that an n number of average flow velocities $u_i$ at the cross-section described below, and cross-sectional area $A_i$ of each virtual curved surface solid within the cross-section, are derived as follows, for example. First, curved surface solid pixels included in a cross-section from which the in-plane uniformity index $\gamma_x$ is to be derived are identified based on a distance x between cross-section and the inflow face 61, and the position information and type information in the porous body table 81 stored in the RAM 24. Next how many types of identification symbols there are in virtual curved surface solids correlated with the identified curved surface solid pixels is counted, and this number is taken as the number n of virtual curved surface solids within the cross-section. Next, one of the identification symbols of the virtual curved surface solids within the cross-section is selected. Next, with regard to the curved surface solid pixel correlated with the selected identification symbol, i.e., the curved surface solid pixels configuring one virtual curved surface solid, the flow velocity vector correlated with each curved surface solid pixel in the fluid analysis processing is found, the average value of the flow velocity components in a direction perpendicular to the cross-section for each curved surface solid pixel is derived, and this is taken as average flow velocity $u_1$. The number of pixels is also counted for the curved surface solid pixels correlated with the selected identification symbol, and the product of the number of pixels and the area of the curved surface solid pixels following the cross-section (=1.44 $\mu$m$^2$) is taken as cross-section area $A_1$. The selected identification symbol is sequentially changed, whereby the average flow velocity $u_2$, $u_3$, ..., $u_n$, and cross-section area $A_2$, $A_3$, ..., An can be derived in the same way for the n virtual curved surface solids within the cross-section. The in-plane uniformity index evaluation module 25d then derives the in-plane uniformity index $\gamma_x$ for multiple cross-sections, e.g., 250 (= 300 $\mu$m / 1.2 $\mu$m) cross-sections with the distance x changed 1.2 $\mu$m (the same value as the length of a pixel in the x direction) at a time for example. It is determined that the pressure drop property of the porous body is acceptable when the average value of the in-plane uniformity index $\gamma_x$ is 0.6 or greater, and unacceptable when smaller than 0.6.

[Math. 1]

$$\gamma_x = 1 - \frac{1}{2} \sum_{i=1}^{n} \frac{|u_i - u_{mean}| \cdot A_i}{u_{mean} \cdot A} \quad \cdots \text{ Expression (1)}$$

where

n: number [count] of virtual curved surface solids within cross-section
x: distance [m] between cross-section and inflow face
$u_i$: average flow velocity (i = 1, 2, ..., n) [m/s] for each of the n virtual curved surface solids at cross-section
$u_{mean}$: average value (=($u_i + u_2 + ... + u_n$)/n) [m/s] of average flow velocity $u_i$ at cross-section
$A_i$: cross-sectional area (i = 1, 2, ..., n) [m$^2$] for each virtual curved surface solid within cross-section
A: total cross-sectional area (= $A_1 + A_2 + ... + A_n$) [m$^2$] of virtual curved surface solids at cross-section

Next, the spatial uniformity index evaluation module 25e performs spatial uniformity index evaluation processing (step S130). In the spatial uniformity index evaluation processing, a spatial uniformity index $\gamma$ is derived, and acceptability determination is made based on the derived value to evaluate the porous body. The spatial uniformity index $\gamma$ is derived by the following Expression (2) using multiple in-plane uniformity indices $\gamma_x$ derived in the in-plane uniformity index evaluation processing. It is determined that the collection performance of the porous body is acceptable when the derived spatial uniformity index $\gamma$ is 0.6 or greater, and unacceptable when smaller than 0.6.

[Math. 2]

$$\gamma = \overline{\gamma_x} \cdot (1 - \delta_\gamma) \quad \cdots \text{ Expression (2)}$$

where

$\overline{\gamma}_x$ : average value of $\gamma_x$

$\delta_\gamma$ : standard deviation of $\gamma_x$

Next, the pressure drop evaluation module 25f performs pressure drop evaluation processing (step S140). In the pressure drop evaluation processing, the pressure drop P per unit thickness is derived, and acceptability determination is made based on the derived value to evaluate the porous body. The pressure drop P is derived by the following Expression (3) using multiple in-plane uniformity indices $\gamma_x$ derived in the in-plane uniformity index evaluation processing. This Expression (3) is one where a known Ergun's Equation representing pressure drop properties at the time of a fluid passing through a porous body has been revised using the in-plane uniformity index $\gamma_x$. Note that the representative hydraulic diameter $Dh_x$ of the space (pores) at the cross-section at distance x is obtained as follows with the present embodiment. First, a total area $A_x$ as the total area of space portions at the cross-section x is derived. This is derived as the product of the number of pixels of the space pixels (including curved surface solid pixels) at the cross-section at distance x, and the cross-sectional area of each pixel (1.44 $\mu m^2$ with the present embodiment). Next, the total wetted perimeter $L_x$ as the total of wetted perimeters at the cross-section at distance x as $L_x$ is derived. This is derived as the total of the length of boundary lines between space pixels (including curved surface solid pixels) and matter pixels. The representative hydraulic diameter $Dh_x$ is then derived from representative hydraulic diameter $Dh_x = 4 \times$ total area $A_x$ / total wetted perimeter $L_x$. A flow velocity average value $U_x$ for every space pixel at the cross-section at the distance x described below may be derived by, for example, finding the flow velocity vectors correlated with each space pixel in the fluid analysis processing for the space pixels (including curved surface solid pixels) at the cross-section at the distance x, deriving the flow velocity component in a direction perpendicular to the cross-section of each space pixel, and deriving the flow velocity average value as the average value thereof. Note that a constant k can be obtained beforehand by experiment, for example, so that the correlation between the pressure drop P and the actual pressure drop of the porous body is higher. With the present embodiment, the constant k is set to the value "-2". The acceptability determination based on pressure drop P is performed as follows, for example. First, the pressure drop P is derived for each of the multiple in-plane uniformity indices $\gamma_x$, and the average value of the multiple pressure drops P is derived. When the average value of the pressure drops P is at or below a predetermined threshold (e.g., allowable upper limit value of pressure drop), it is determined that the pressure drop of the porous body is acceptable, while it is determined to be unacceptable when the predetermined threshold is exceeded. At the time of deriving the multiple pressure drops P with the present embodiment, the distance x is changed by a value the same as the X direction length of the pixels (1.2 $\mu m$ with the present embodiment), i.e., shifting the cross-section which is the object of derivation one pixel at a time, and pressure drops P of a number corresponding to as many in-plane uniformity indices $\gamma_x$ as there are pixels in the X direction are derived. However, the method for deriving the average value of pressure drops P is not restricted to this, and any method will suffice as long as pressure drops P corresponding to multiple in-plane uniformity indices $\gamma_x$ are derived while changing the distance x and the average thereof is derived.

[Math. 3]

$$P = \frac{\Delta P_x}{\Delta x} = \left( \frac{200}{3} \frac{1}{D_{hx}^{2} \cdot \varepsilon_x} \mu U_x + \frac{7}{6} \frac{1}{D_{hx} \cdot \varepsilon_x^{2}} \rho U_x^{2} \right) \cdot \gamma_x^{k}$$

$$\cdots \text{ Expression (3)}$$

where

$\Delta x$     : cross-sectional thickness [m] at cross-section at distance x:

$\Delta P_x$    : pressure drop [Pa] at cross-section at distance x

$Dh_x$:    representative hydraulic diameter [m] of space (pores) at cross-section at distance x

$\varepsilon_x$     : voidage (= number of space pixels / (number of space pixels + number of matter pixels)) at cross-section at distance x

$\mu$     : viscosity [Pa·s] of fluid

$U_x$    : flow velocity average value [m/s] at each space pixel at cross-section at distance x

$\rho$     : density of fluid [kg/m$^3$]

k     : constant

Next, the flow-through velocity evaluation module 25g performs flow-through velocity evaluation processing (step S150). In the flow-through velocity evaluation processing, the flow-through velocity T at each virtual curved surface solid is derived, the virtual curved surface solids are classified based on the derived values, and the porous body is evaluated based on the classification results. The flow-through velocity T at each virtual curved surface solid is derived as follows. First, a through-flow volume Q of the fluid per unit time is derived for each virtual curved surface solid. The flow-through velocity T of each virtual curved surface solid is then derived by $T = Q/(\pi d^2/4)$, based on the derived through-flow volume Q and an equivalent diameter d of the virtual curved surface solid (= 6 $\times$ volume V of virtual curved surface solid / surface area S of virtual curved surface solid). The through-flow volume Q, volume V, and surface area S of each virtual sphere is derived as follows. First, one virtual curved surface solid is selected, and the curved surface solid pixels corresponding to the identification symbols of the selected virtual curved surface solid are found from the porous body table 81 in the RAM 24. The number of pixels of the curved surface solid pixels configuring the selected virtual curved surface solid is derived, and the product of the number of pixels and the volume of one curved surface solid pixel (1.728 $\mu m^3$ with the present embodiment) is taken as the volume V. The surface area S of the selected virtual curved surface solid is derived based on information (center coordinates and diameters of parent virtual sphere and child virtual spheres) included in the virtual curved surface solid table 83. Next, of the curved surface solid pixels configuring the selected virtual curved surface solid, the curved surface solid pixel configuring the surface of the virtual curved surface solid are identified based on the information included in the virtual curved surface solid table 83. The flow vectors correlated with the curved surface solid pixels configuring the surface are found using the porous body table 81 in the RAM 24, the curved surface solid pixels of which the flow velocity vector heads toward the inside of the virtual curved surface solid are identified, the magnitude of the flow velocity vectors of the identified curved surface solid pixels is obtained for each curved surface solid pixel, and through-flow volume Q per unit time is derived by the through-flow volume Q per unit time = (sum of magnitude of flow velocity vectors) $\times$ (number of identified curved surface solid pixels) $\times$ (area of one face of a curved surface solid pixel (= 1.44 $\mu m^2$)). Thus, the flow-through velocity T of the selected curved surface solid pixel can be derived. In the same way, the flow-through velocity T is derived for each of the multiple virtual curved surface solids.

Classification of each of virtual curved surface solids in the flow-through velocity evaluation processing is performed as follows. First, one virtual curved surface solid is selected, and a flow velocity ratio $T_f$ (= $T/T_{in}$) is derived from the flow-through velocity T of the selected virtual curved surface solid and the average flow velocity $T_{in}$ in fluid analysis. A virtual curved surface solid having a flow velocity ratio within the range of $T_f < 2$ is classified as being a low-flow-velocity curved surface solid, a virtual curved surface solid having a flow velocity ratio within the range of $2 \leq T_f < 8$ is classified as being a mid-flow-velocity curved surface solid, and a virtual curved surface solid having a flow velocity ratio within the range of $8 \leq T_f$ is classified as being a high-flow-velocity curved surface solid. Each of the virtual curved surface solids are classified in the same way. It is determined that the performance of the porous body is acceptable when the percentage of the total value of volume V of the low-flow-velocity curved surface solid is 20% or less as to the total value of volume V of the multiple virtual curved surface solids, and at the same time the percentage of the total value of volume V of the high-flow-velocity curved surface solid is 10% or less. On the other hand, it is determined that the performance of the porous body is unacceptable when the percentage of the total value of volume V of the low-flow-velocity curved surface solid is greater than 20%, or when the percentage of the total value of volume V of the high-flow-velocity curved surface solid is greater than 10%.

Next, the equivalent diameter evaluation module 25h performs equivalent diameter evaluation processing (step S160). In the equivalent diameter evaluation processing, the equivalent diameter d of each virtual sphere is derived, the virtual curved surface solids are classified based on the equivalent diameter d, and the porous body is evaluated based on the classification results. In classification of the virtual curved surface solids based on the equivalent diameter d, a virtual curved surface solid having an equivalent diameter within the range of $d < 10$ $\mu m$ is classified as being a small-diameter curved surface solid, a virtual curved surface solid having an equivalent diameter within the range of $10$ $\mu m \leq d \leq 25$ $\mu m$ is classified as being a mid-diameter curved surface solid, and a virtual curved surface solid having an equivalent diameter within the range of $25$ $\mu m < d$ is classified as being a large-diameter curved surface solid. It is determined that the performance of the porous body is acceptable when the percentage of the total value of volume V of mid-diameter curved surface solids as to the total value of volume V of the multiple virtual curved surface solids is 60% or more, and unacceptable when the percentage is less than 60%. Note that the equivalent diameter d and the volume V may be derived in the same way as with the flow-through velocity evaluation processing described above, or values derived in the flow-through velocity evaluation processing may be used without change.

Upon performing each evaluation processing of steps S120 through S160, the analysis result output module 25i performs analysis result output processing in which the information and the like stored in the RAM 24 in the above processing is output as analysis result data and stored in the HDD 25 (step S170), and the present routine ends. The analysis result data includes, for example, the porous body data 80 including the porous body table 81, inflow/outflow table 82, and virtual curved surface solid table 83, stored in the RAM 24, the values of the in-plane uniformity index $\gamma_x$ and the results of acceptability determination in the in-plane uniformity index evaluation processing, the values of the spatial uniformity index $\gamma$ and the results of acceptability determination in the spatial uniformity index evaluation processing, the values of the pressure drop P and the results of acceptability determination in the pressure drop evaluation processing, the values of the flow-through velocity T and flow velocity ratio $T_f$ in the flow-through velocity evaluation processing, percentages of the total value of volume V of low-flow-velocity curved surface solids and the total value of volume V of high-flow-velocity curved surface solids and the results of acceptability determination, the values of equivalent diameter d in the equivalent diameter evaluation processing, and percentage of the total value of volume V of mid-diameter curved surface solids and the results of acceptability determination, and so forth. Values used for the fluid analysis processing, such as average flow velocity $T_{in}$, fluid viscosity $\mu$, fluid density $\rho$, and so forth may also be included.

The results of analysis of the microstructure of the porous partition 44 according to the present embodiment, performed as described above, satisfy at least one of the following three conditions; "the average value of multiple in-plane uniformity indices $\gamma_x$ is 0.6 or greater, and the spatial uniformity index $\gamma$ is 0.6 or greater" (that is, the evaluation results of in-plane uniformity index evaluation processing and spatial uniformity index evaluation processing are both good), "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less" (that is, the evaluation results of flow-through velocity evaluation processing are good), and "the percentage of the total value of volume of mid-diameter curved surface solids as to the total value of volume of multiple virtual curved surface solids is 60% or more" (that is, the evaluation results of equivalent diameter evaluation processing are good). Preferably, two or more conditions are satisfied, and more preferably, all three conditions are satisfied.

Next, a method of manufacturing the honeycomb filter 30 including the porous partition 44 according to the present embodiment will be described. The porous partition 44 of the honeycomb filter 30 can be manufactured by way of a raw material mixing process where a base material and a pore-forming agent are mixed to form a green body, and a molding-and- sintering process where the green body is formed to yield a compact, and the compact is sintered. The aforementioned inorganic material can be used for the base material. For example, a mixture of 80:20 by mass of Sic powder and metal Si powder can be used for a substrate of SiC. The pore-forming agent preferably burns away in the later sintering, examples thereof including starch, coke, foamed resin, or the like. The average particle size of the base material is 5 to 50 $\mu$m, for example, but is not restricted in particular. The average particle size of the pore-forming agent is 5 to 50 $\mu$m, for example, but is not restricted in particular. A base material where the value of (D90 - D10) / D50 is 2 or smaller is used, where D10 represents particle diameter that is 10% by volume, D50 represents particle diameter that is 50% by volume, and D90 represents particle diameter that is 90% by volume. The smaller the (D90 - D10) / D50 of the base material is, the more preferable, and preferably is a value 1.5 or smaller, for example. In the same way, the smaller the (D90 - D10) / D50 of the pore-forming agent is, the more preferable, and preferably is a value 1.5 or smaller. Now, the term that D10 of the base material, which is to say particle diameter that is 10% by volume, is a value 20 $\mu$m, means that the total volume of particles of which the particle diameter is 20 $\mu$m or smaller occupies 10% of the total volume of all particles of the base material. This is the same for D50 and D90 as well. D10, D50, and D90 are values of D10, D50, and D90 obtained by measuring raw material particles using a laser diffraction/scattering particle size distribution measurement device, with water as a dispersant. In the raw material mixing process a binder such as methyl cellulose and hydroxypropoxyl methyl cellulose, and water may be added, and dispersant further mixed in. A surfactant such as ethylene glycol or the like can be used for the dispersant. The means for preparing the green body are not restricted in particular, examples thereof including methods using a kneader, a vacuum kneading machine, and so forth. In the molding-and-sintering process, for example, this green body is molded by extrusion into the shape with cells 34 arrayed as illustrated in Figs. 1 and 2 using a mold, the cells 34 are sealed off by the outlet sealant 38 or inlet sealant 42, and then the body is dried, pre-sintered, and sintered, whereby the honeycomb filter 30 including the porous partitions 44 can be fabricated. The outlet sealant 38 and inlet sealant 42 may be formed of the raw material used for forming the porous partition 44. The pre-sintering process is to burn away organic components included in the honeycomb filter 30, at a temperature lower than the sintering temperature. The sintering temperature can be 1400 °C to 1450 °C for cordierite material, and 1450 °C for Si-bonded SiC. The honeycomb filter 30 including the porous partitions 44 is obtained through such processes.

According to the present embodiment described in detail above, the porous partition 44 serving as the porous body satisfies at least one of the three conditions when the microstructure is analyzed using the user PC 20; "the average value of multiple in-plane uniformity indices $\gamma_X$ is 0.6 or greater, and the spatial uniformity index $\gamma$ is 0.6 or greater", "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less", and "the percentage of the total value of volume of mid-diameter curved surface solids as to the total value of volume of multiple virtual curved surface solids is 60% or more". Accordingly, pressure drop has been sufficiently reduced and also collection performance has been sufficiently improved.

Now, the more uniform the flow velocity of the fluid at a cross-section of the porous body is, the greater (closer to 1) the value of the in-plane uniformity index $\gamma_X$ is, and the more variance there is in the flow velocity of the fluid at the cross-section is, the smaller the value is. Also, the smaller the variance in the in-plane uniformity index $\gamma_X$ derived for multiple cross-sections is, the greater the value of the spatial uniformity index $\gamma$ is, and the greater the variance is, the smaller the value is. Portions of the pores (spaces) within the porous body where the flow velocity of the passing fluid is relatively small may not contribute much to transmittance of the fluid, which may lead to increased pressure drop, and deterioration in thermal conductivity and thermal capacity of the material. Also, portions of the pores where the flow velocity of the passing fluid is relatively great may exhibit great flow resistance when the fluid passes through, or may not contribute much to collecting performance because the fluid passes through in a short time. Accordingly, when the condition of the in-plane uniformity index $\gamma_X$ being 0.6 or greater, and the spatial uniformity index $\gamma$ being 0.6 or greater is satisfied, there are few such portions where the flow velocity is relatively smaller or portions where the flow velocity is relatively great, so it can be conceived that the pressure drop is sufficiently reduced and collection performance is sufficiently improved thereby.

In the same way, pores of the porous body simulated with virtual curved surface solids of which the flow velocity ratio $T_f$ is relatively small may not contribute much to transmittance of the fluid, leading increased pressure drop, and deterioration in thermal conductivity and thermal capacity of the material. Also, pores of the porous body simulated with virtual curved surface solids of which the flow velocity ratio $T_f$ is relatively great may exhibit great flow resistance when the fluid passes through, or may not contribute much to collecting performance because the fluid passese through in a short time. Accordingly, when the condition of "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less" is satisfied, there are few such portions where the flow velocity is relatively smaller or portions where the flow velocity is relatively great, so it can be conceived that the pressure drop is sufficiently reduced and collection performance is sufficiently improved thereby.

Also, with pores of the porous body simulated with virtual curved surface solids of which the equivalent diameter d is small, the flow velocity of the fluid passing through may be small, leading to increased pressure drop, or the catalyst applied to the walls of the pores to use the porous body as a filter may not be appropriately applied, or the like. Also, pores of the porous body simulated with virtual curved surface solids of which the equivalent diameter d great, may result in the flow velocity of the fluid passing through being great to the point of not contributing to collecting performance very much when using the porous body as a filter. Accordingly, when the condition of "the percentage of the total value of volume of mid-diameter curved surface solids as to the total value of volume of multiple virtual curved surface solids is 60% or more" is satisfied, it can be conceived that the pressure drop is sufficiently reduced and collection performance is sufficiently improved by there being few such pores where the equivalent diameter d is small and pores where the equivalent diameter d is great.

Also, when manufacturing the porous partition 44, the value of (D90 - D10) / D50 for the base material is 2 or smaller, and the value of the (D90 - D10) / D50 for the pore-forming agent is 2 or smaller. Such a small variance in the particle diameter of the base material and pore-forming agent enables a porous body to be obtained with sufficiently reduced pressure drop and sufficiently improved collection performance.

Note that the present invention is by no way restricted to the above-described embodiment, and it is clearly understood that various forms may be realized as long as within the technical scope of the present invention.

For example, in the above-described embodiment, the performance of the porous body is determined to be good in a case where, in the equivalent diameter evaluation processing, the percentage of the total value of volume V of mid-diameter curved surface solids as to the total value of volume V of multiple virtual curved surface solids is 60% or more. But performance of the porous body may be determined to be good when the percentage is 70% or more. When the condition of "the percentage of the total value of volume V of mid-diameter curved surface solids as to the total value of volume V of multiple virtual curved surface solids is 70% or more" is satisfied for the porous body, pressure drop is further reduced and collection performance is further improved.

In the above-described embodiment, the results of analyzing the above-described microstructure of the porous partition 44 satisfy at least one of the following three conditions; "the average value of multiple in-plane uniformity indices

$\gamma_X$ is 0.6 or greater, and the spatial uniformity index $\gamma$ is 0.6 or greater", "the percentage of the total value of volume of low-flow-velocity curved surface solids as to the total value of volume of multiple virtual curved surface solids is 20% or less, and the percentage of the total value of volume of high-flow-velocity curved surface solids as to the total value of volume of multiple virtual curved surface solids is 10% or less", and "the percentage of the total value of volume of mid-diameter curved surface solids as to the total value of volume of multiple virtual curved surface solids is 60% or more". However, porous partition 44 manufactured by the above-described manufacturing method satisfying the conditions where the value of (D90 - D10) / D50 for the base material is 2 or smaller, and the value of the (D90 - D10) / D50 for the pore-forming agent is 2 or smaller need not satisfy any of these three conditions. Further, an arrangement may be made where none of these three conditions are satisfied, but the condition of "the average value of multiple in-plane uniformity indices $\gamma_X$ is 0.6 or greater" is satisfied.

EXAMPLES

Example 1

A honeycomb filter according to Example 1 was fabricated as follows. First, SiC powder, having an average particle diameter of 40 $\mu$m and a value for (D90 - D10) / D50 of 1.9, and metal Si powder, having an average particle diameter of 4 $\mu$m and a value for (D90 - D10) / D50 of 1.8, were mixed at a ratio of 80:20 by mass, to serve as a base material. This base material, and a pore-forming agent (starch) having an average particle diameter of 30 $\mu$m and a value for (D90 - D10) / D50 of 1.7, were mixed at a ratio of 100:30 by mass, to which methylcellulose serving as an organic binder and an appropriate amount of water were added and mixed, thereby yielding a green body. The SiC powder, metal Si powder, and pore-forming agent, were subjected to sieving using a screen with a predetermined sieve opening, thereby suppressing variance in particle diameter and obtaining those where the values of (D90 - D10) / D50 are as described above. Next, a predetermined mold was used to extrude the green body, thus forming a compact having the form of the porous partition 44 illustrated in Figs. 1 and 2. Next, the obtained compact was dried by microwave, and further dried by hot air. Thereafter, the article is sealed, pre-sintered in an oxidizing atmosphere at 550 °C for three hours, following which main sintering was performed under the conditions of two hours in an inert atmosphere at 1450 °C. Forming the seal portions was performed by alternatingly masking the cell openings at the end face of the compact on one side, dipping the masked end in a sealant slurry including an SiC raw material, so that openings and sealed portions alternate. The other end face was also masked in the same way, and sealed portions were formed so that cells open on one side and sealed on the other and cells sealed on the one side and opened on the other are alternatingly arrayed. The compact after the main sintering is ground into a cylindrical shape, following which the perimeter thereof was covered with a perimeter coating slurring made by mixing alumina silicate fiver, colloidal silica, polyvinyl alcohol, SiC, and water, and then hardened by drying, thus yielding an external protective portion 32. Thus, the honeycomb filter of Example 1 was obtained. The shape of the honeycomb filter was such that the cross-sectional diameter was 144 mm, the length was 152 mm, the cell density was 46.5 cells/cm$^2$, and the thickness of the partitions was 0.31 mm.

Example 2

A honeycomb filter according to Example 2 was fabricated in the same way as Example 1, except that the value for (D90 - D10) / D50 of the Sic powder was 1.3, the value for (D90 - D10) / D50 of the metal Si powder was 1.3, and the value for (D90 - D10) / D50 of the pore-forming agent was 1.2.

Creating Microstructure Analysis Device

A microstructure analysis device was created to evaluate Examples 1 and 2. First, an analysis processing program 25a having the functions of the above-described embodiment was created. This program was then stored in the HDD of a computer having a controller including a CPU, ROM, and RAM, and a HDD, thereby creating a microstructure analysis device.

Evaluation by Microstructure Analysis Device

Porous partitions (porous bodies) of the honeycomb filters according to Examples 1 and 2 were CT-scanned, and of pixel data obtained thereby, one data was extracted where the X direction is 300 $\mu$m (= 1.2 $\mu$m x 250 pixels), which is the same value as the thickness in the direction of passage of the exhaust gas, the Y direction is 480 $\mu$m (= 1.2 $\mu$m x 400 pixels), and the Z direction is 480 $\mu$m (= 1.2 $\mu$m x 400 pixels), which was stored in the HDD as the above-described porous body data 60, and the above-described analysis processing routine was executed regarding this porous body data 60. Analysis result data of the Examples 1 and 2 was obtained, including the above-described porous body table, virtual curved surface solid table, average value of in-plane uniformity index $\gamma_X$, spatial uniformity index $\gamma$, average value of pressure drop P, flow velocity ratio $T_f$ (= $T/T_{in}$) of each virtual curved surface solid, equivalent diameter d of each virtual curved surface solid, volume V, and so forth.

In-Plane Uniformity Index $\gamma_X$

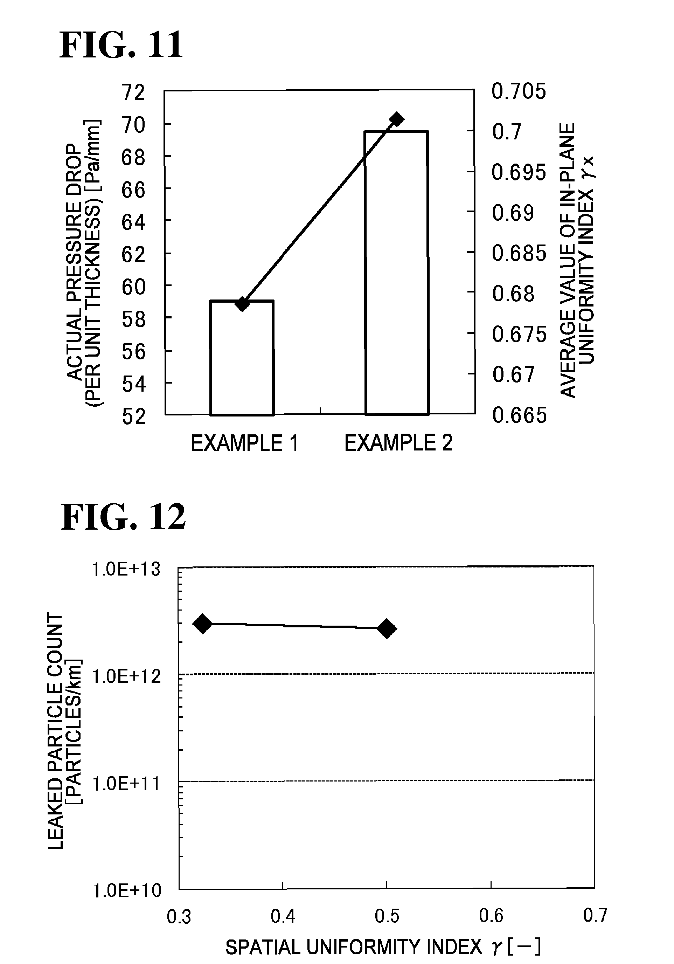

Fig. 11 is a graph illustrating the average value of in-plane uniformity index $\gamma_X$ in the analysis result data in Examples 1 and 2. Fig. 11 also shows the actual pressure drop measured regarding the porous partitions of Examples 1 and 2 according to a method described in the embodiments in Japanese Unexamined Patent Application Publication No. 2005-114612. As illustrated in this diagram, the average value of the in-plane uniformity index $\gamma_X$ was 0.6 or greater for both Examples 1 and 2. Example 2 exhibited a higher average value for the in-plane uniformity index $\gamma_X$.

Spatial Uniformity Index $\gamma$

Fig. 12 is a graph illustrating the value of spatial uniformity index $\gamma$ in the analysis result data in Examples 1 and 2. In Fig. 12, the horizontal axis represents the value of the spatial uniformity index $\gamma$, and the vertical axis represents the leaked particle count actually measured. The leaked particle count [particles/km] is an index indicating collection performance (the smaller the leaked particle count is, the higher the collection performance is). This was obtained by actually passing a fluid including particulate matter through the porous partitions according to the Examples 1 and 2, measuring the remaining number of particles in the fluid after passage as the leaked particle count, and converting this into a leaked particle count per passage distance of 1 km. As illustrated in the diagram, the value of the spatial uniformity index $\gamma$ of Example 2 exceeds 0.5, and Example 2 which exhibited a greater spatial uniformity index $\gamma$ had a smaller leaked particle count (higher collection performance).

Results of Classification by Flow Velocity Ratio $T_f$

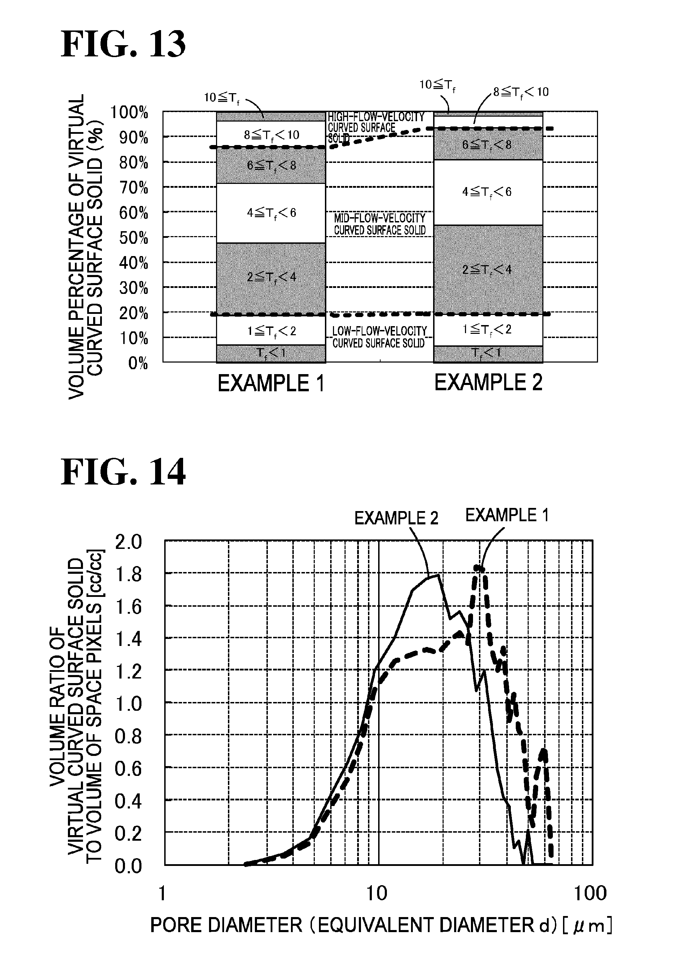

Fig. 13 is a graph illustrating classification of the virtual curved surface solids in the analysis data in Examples 1 and 2 by flow velocity ratio $T_f$ (= $T/T_{in}$) in the analysis data. Note that in Fig. 13, the virtual curved surface solids are classified by flow velocity ratio $T_f$, the total value of volume V is derived for virtual curved surface solids of the same classification, the percentage of the total value of volume V for the virtual curved surface solids of each classification as to the total value of volume V of all virtual curved surface solids is obtained, and the vertical axis represents this percentage. As shown in the diagram, in Example 1, the percentage of the total value of volume for the low-flow-velocity curved surface solids (curved surface solids where flow velocity ratio $T_f < 2$) as to the total value of volume of multiple virtual curved surface solids was 20% or less. In Example 2, the condition "the percentage of the total value of volume of low-flow-velocity curved surface solids (curved surface solids where flow velocity ratio $T_f < 2$) as to the total value of volume of multiple virtual curved surface solids is 20% or less, and the percentage of the total value of volume of high-flow-velocity curved surface solids (curved surface solids where flow velocity ratio $T_f \geq 8$) as to the total value of volume of multiple virtual curved surface solids is 10% or less" is satisfied, and the evaluation results in flow-through velocity evaluation processing were satisfactory.

Tabulation Results of Pore Diameter

Fig. 16 is a graph illustrating tabulation results of the pore diameter (equivalent diameter d of virtual curved surface bodies) of the porous partition in Examples 1 and 2 based on the analysis result data in Examples 1 and 2. Fig. 14 is a log differential pore volume distribution graph with the horizontal axis as the equivalent diameter d, and the vertical axis as the volume ratio [cc/cc] as to the volume of space pixels (= (the sum of volumes V of virtual curved surface solids corresponding to the equivalent diameters d) / (sum of volume of all space pixels)). In the microstructure analysis device, the equivalent diameters d of the placed virtual curved surface solids are derived, and the distribution of pore diameters within the porous body is analyzed as a distribution of equivalent diameters d in the porous body by using this value, as illustrated in the drawings.

Results of Classification by Equivalent Diameter d

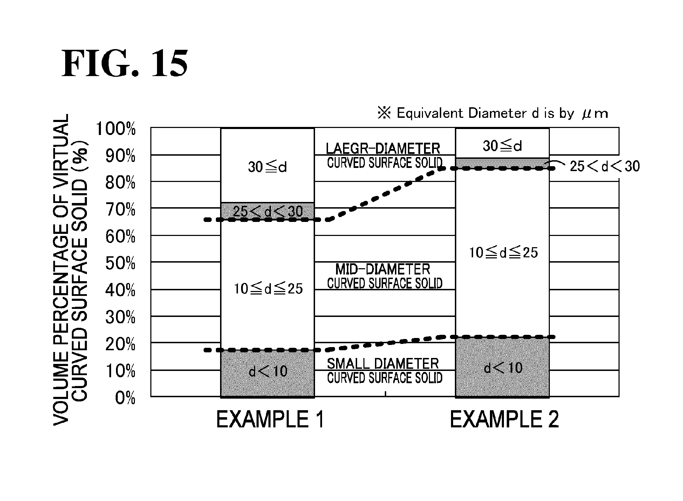

Fig. 15 is a graph illustrating classification of the virtual curved surface solids in the analysis data of the Examples 1 and 2 by the equivalent diameter d of the virtual curved surface solids. Note that in Fig. 15 the virtual curved surface solids are classified by equivalent diameter d, the total value of volume V is derived for virtual curved surface solids of the same classification, the percentage of the total value of volume V for the virtual curved surface solids of each classification as to the total value of volume V of all virtual curved surface solids is obtained, and the vertical axis represents this percentage. As illustrated in the diagram, Example 2 satisfies the condition of "the percentage of the total value of volume of mid-diameter curved surface solids (virtual curved surface solids where 10 $\mu$m $\leq$ equivalent diameter d $\leq$ 25 $\mu$m) as to the total value of volume of multiple virtual curved surface solids is 60% or more", and the evaluation results in equivalent diameter evaluation processing were satisfactory.

The (D90 - D10) / D50 values for the base material and pore-forming agent, average values of in-plane uniformity indices $\gamma_X$, values of spatial uniformity indices $\gamma$, percentage of low-flow-velocity curved surface solids by volume, percentage of high-flow-velocity curved surface solids by volume, percentage of mid-diameter curved surface solids by volume, leaked particle count, and actual pressure drop, of Examples 1 and 2, which have been described above, are shown together in Table 1.

Table 1

|  | Example 1 | Example 2 |
|---|---|---|
| (D90-D10)/D50 of Base Material (SiC Powder) | 1.9 | 1.3 |
| (D90-D10)/D50 of Base Material (Metal Si Powder) | 1.8 | 1.3 |
| (D90-D10)/D50 of Pore Forming Agent (Starch) | 1.7 | 1.2 |
| Average Value of In-Plane Uniformity Index $\gamma \times$ | 0.678681 | 0.701425 |
| Value of Spatial Uniformity Index $\gamma$ | 0.32311 | 0.50004 |
| Volume Percentage of Curved Surface Solids with Low-Flow-Velocity (Virtual Curved Surface Solid with Flow Velocity Ratio Tf<2) [%] | 18.779 | 19.174 |
| Volume Percentage of Curved Surface Solids with High-Flow-Velocity (Virtual Curved Surface Solid with Flow Velocity Ratio Tf$\geqq$8) [%] | 14.11 | 6.462 |
| Volume Percentage of Curved Surface Solids with Mid-Diameter (Virtual Curved Surface Solid with 10 $\mu$m $\leqq$Equivalent Diameter d$\leqq$25 $\mu$m) [%] | 48.443 | 62.964 |
| Leaked Particle Count [Particles/km] | 2.96E+12 | 2.66E+12 |
| Actual Pressure Drop [Pa/mm] | 59.0188 | 69.4496 |

The present application claims priority from Japanese Patent Application No. 2012-082500 filed on March 30, 2012, the entire contents of which are incorporated herein by reference.

Industrial Applicability

The present invention is applicable to the manufacturing industry of porous bodies used as filters for purging exhaust gas emitted from stationary engines and burning appliances and the like for automobiles, construction equipment, and industrial use.

Reference Signs List

User personal computer (PC) 20, controller 21, CPU 22, ROM 23, RAM 24, HDD 25, analysis processing program 25a, virtual curved surface solid placement module 25b, fluid analyzing module 25c, in-plane uniformity index evaluation module 25d, spatial uniformity index evaluation module 25e, pressure drop evaluation module 25f, flow-through velocity evaluation module 25g, equivalent diameter evaluation module 25h, analysis result output module 25i, display 26, input device 27, honeycomb filter 30, external protective portion 32, cell 34, inlet-opened cell 36, inlet 36a, outlet 36b, outlet sealant 38, outlet-opened cell 40, inlet 40a, outlet 40b, inlet sealant 42, porous partition 44, region 50, porous body data 60, inflow face 61, outflow face 62, X-Y plane 63, enlarged drawing 64, porous body table 71, inflow/outflow table 72, porous body data 80, porous body table 81, inflow/outflow table 82, curved surface solid table 83, virtual wall face 85.

**Claims**

1.   A porous body,
     wherein, when

creating porous body data based on an image obtained by a 3-dimensional scan of the porous body, in which porous body data is correlated position information representing position of a pixel in the image, and pixel type information representing whether a space pixel representing that the pixel is space or a matter pixel representing that the pixel is matter,

performing a processing of placing, as to the porous body data, one parent virtual sphere having the greatest spherical diameter that can be placed so as to fill in the space pixels without overlapping with the matter pixel, placing at least one child virtual sphere such that the center of the child virtual sphere overlaps with the placed parent virtual sphere and pixels occupied by the child virtual sphere fill in the space pixels without overlapping with the matter pixel, and placing one virtual curved surface solid formed of the parent virtual sphere and the child virtual sphere so as to fill in the space pixels with curved surface solid pixels which are pixels occupied by the virtual curved surface solid, and repeating this processing such that pixels occupied by different virtual curved surface solids do not overlap each other, thereby placing a plurality of the virtual curved surface solids,

performing fluid analysis regarding a case of inflow of a fluid from a predetermined inflow face of the porous body by the lattice Boltzmann method based on the porous body data, and thereby deriving a flow velocity vector of the fluid for each space pixel at the time of the fluid passing through the porous body, and

deriving a plurality of in-plane uniformity indices $\gamma_x$ of flow velocity at a cross-section on the porous body parallel to the inflow face, by the following Expression (1), based on information relating to the placed virtual curved surface solids and information relating to the derived flow velocity vector for each space pixel, and deriving a spatial uniformity index $\gamma$ of flow velocity at the porous body by the following Expression (2) using the derived in-plane uniformity indices $\gamma_x$;

the average value of the plurality of in-plane uniformity indices $\gamma_X$ is 0.6 or greater, and the spatial uniformity index $\gamma$ is 0.6 or greater.

$$\gamma_x = 1 - \frac{1}{2} \sum_{i=1}^{n} \frac{|u_i - u_{mean}| \cdot A_i}{u_{mean} \cdot A} \quad \cdots \text{ Expression (1)}$$

where

n : number [count] of virtual curved surface solids within cross-section
x : distance [m] between cross-section and inflow face
$u_i$ : average flow velocity (i = 1, 2, ..., n) [m/s] for each of the n virtual curved surface solids at cross-section
$u_{mean}$ : average value (=$(u_i + u_2 + ... + u_n)/n$) [m/s] of average flow velocity $u_i$ at cross-section
$A_i$ : cross-sectional area (i = 1, 2, ..., n) [m$^2$] for each virtual curved surface solid within cross-section
A : total cross-sectional area (= $A_1 + A_2 + ... + A_n$) [m$^2$] of virtual curved surface solids at cross-section

$$\gamma = \overline{\gamma_x} \cdot (1 - \delta_\gamma) \quad \cdots \text{ Expression (2)}$$

where

$\overline{\gamma_x}$ : average value of $\gamma_x$
$\delta_\gamma$ standard deviation of $\gamma_x$

2. The porous body according to Claim 1,
wherein, when
deriving through-flow volume Q of the fluid per unit time at the virtual curved surface solid for each virtual curved surface solid, based on information relating to the placed virtual curved surface solids and information relating to the flow velocity vector for the each space pixel, and deriving flow-through velocity T of each virtual curved surface solid by T = $Q/\pi d^2/4$) based on the derived through-flow volume Q and an equivalent diameter d of the virtual curved surface solid (= 6 x volume V of virtual curved surface solid / surface area S of virtual curved surface solid),

deriving a flow velocity ratio $T_f$ (=$T/T_{in}$) of the derived flow-through velocity T to an average flow velocity $T_{in}$ of the fluid at the inflow face in the fluid analysis, and performing classification such that, of the placed virtual curved surface solids, virtual curved surface solids which satisfy $T_f < 2$ are classified as low-flow-velocity curved surface solids, and virtual curved surface solids which satisfy $8 \le T_f$ as high-flow-velocity curved surface solids;

the percentage of the total value of volume of the low-flow-velocity curved surface solids as to the total value of volume of the plurality of virtual curved surface solids is 20% or less, and the percentage of the total value of volume of the high-flow-velocity curved surface solids as to the total value of volume of the plurality of virtual curved surface solids is 10% or less.

**3.** The porous body according to either Claim 1 or 2,
wherein, when
deriving an equivalent diameter d of each virtual curved surface solid by d = 6 x (volume V of virtual curved surface solid) / (surface area S of virtual curved surface solid) based on information relating to the placed virtual curved surface solids, and classifying virtual curved surface solids where the value of the derived equivalent diameter d satisfies 10 $\mu$m $\leq$ d $\leq$ 25 $\mu$m as mid-diameter curved surface solids;
the percentage of the total value of volume of the mid-diameter curved surface solids as to the total value of volume of the plurality of virtual curved surface solids is 60% or greater.

**4.** A porous body,
wherein, when
creating porous body data based on an image obtained by a 3-dimensional scan of the porous body, in which porous body data is correlated position information representing position of a pixel in the image, and pixel type information representing whether a space pixel representing that the pixel is space or a matter pixel representing that the pixel is matter,
performing a processing of placing, as to the porous body data, one parent virtual sphere having the greatest spherical diameter that can be placed so as to fill in the space pixels without overlapping with the matter pixel, placing at least one child virtual sphere such that the center of the child virtual sphere overlaps with the placed parent virtual sphere and pixels occupied by the child virtual sphere fill in the space pixels without overlapping with the matter pixel, and placing one virtual curved surface solid formed of the parent virtual sphere and the child virtual sphere so as to fill in the space pixels with curved surface solid pixels which are pixels occupied by the virtual curved surface solid, and repeating this processing such that pixels occupied by different virtual curved surface solids do not overlap each other, thereby placing a plurality of the virtual curved surface solids,
performing fluid analysis regarding a case of inflow of a fluid from a predetermined inflow face of the porous body by the lattice Boltzmann method based on the porous body data, and thereby deriving a flow velocity vector of the fluid for each space pixel at the time of the fluid passing through the porous body,
deriving through-flow volume Q of the fluid per unit time at the virtual curved surface solid for each virtual curved surface solid, based on information relating to the placed virtual curved surface solids and information relating to the flow velocity vector for the each space pixel, and deriving flow-through velocity T of each virtual curved surface solid by T = Q/($\pi$d$^2$/4) based on the derived through-flow volume Q and an equivalent diameter d of the virtual curved surface solid (= 6 x volume V of virtual curved surface solid / surface area S of virtual curved surface solid),
deriving a flow velocity ratio $T_f$ (=T/$T_{in}$) of the derived flow-through velocity T to an average flow velocity $T_{in}$ of the fluid at the inflow face in the fluid analysis, and performing classification such that, of the placed virtual curved surface solids, virtual curved surface solids where $T_f$ < 2 are classified as low-flow-velocity curved surface solids, and virtual curved surface solids where 8 $\leq$ $T_f$ as high-flow-velocity curved surface solids;
the percentage of the total value of volume of the low-flow-velocity curved surface solids as to the total value of volume of the plurality of virtual curved surface solids is 20% or less, and the percentage of the total value of volume of the high-flow-velocity curved surface solids as to the total value of volume of the plurality of virtual curved surface solids is 10% or less.

**5.** A porous body,
wherein, when
creating porous body data based on an image obtained by a 3-dimensional scan of the porous body, in which porous body data is correlated position information representing position of a pixel in the image, and pixel type information representing whether a space pixel representing that the pixel is space or a matter pixel representing that the pixel is matter,
performing a processing of placing, as to the porous body data, one parent virtual sphere having the greatest spherical diameter that can be placed so as to fill in the space pixels without overlapping with the matter pixel, placing at least one child virtual spheres such that the center of the child virtual sphere overlaps with the placed parent virtual sphere and pixels occupied by the child virtual sphere fill in the space pixels without overlapping with the matter pixel, and placing one virtual curved surface solid formed of the parent virtual sphere and the child virtual sphere so as to fill in the space pixels with curved surface solid pixels which are pixels occupied by the virtual curved surface solid, and repeating this processing such that pixels occupied by different virtual curved surface solids do not overlap each other, thereby placing a plurality of the virtual curved surface solids,

deriving an equivalent diameter d of each virtual curved surface solid by 6 x (volume V of virtual curved surface solid) / (surface area S of virtual curved surface solid) based on information relating to the placed virtual curved surface solids, and classifying virtual curved surface solids where the value of the derived equivalent diameter d satisfies 10 $\mu$m $\leq$ d $\leq$ 25 $\mu$m as mid-diameter curved surface solids;

the percentage of the total value of volume of the mid-diameter curved surface solids as to the total value of volume of the plurality of virtual curved surface solids is 60% or greater.

6. The porous body according to either Claim 3 or 5,

wherein the percentage of the total value of volume of the mid-diameter curved surface solids as to the total value of volume of the plurality of virtual curved surface solids is 70% or greater.

7. A honeycomb filter comprising:

a partition formed of the porous body according to any one of Claims 1 through 6, forming a plurality of cells of which one end is open and the other end is sealed and which serve as channels for a fluid.

8. A method for manufacturing a porous body, the method comprising:

a raw material mixing step of mixing a base material made up of an inorganic material, and a pore-forming agent, to yield a green body; and

a molding-and- sintering step of obtaining a compact by molding the green body, and sintering the compact;

wherein a (D90 - D10)/ D50 value of the base material is 2 or less, and a (D90 - D10)/ D50 value of the pore-forming agent is 2 or less, where D10 represents particle diameter that is 10% by volume, D50 represents particle diameter that is 50% by volume, and D90 represents particle diameter that is 90% by volume.

# FIG. 1

A ◄ —

30

44

36a(36)

40a(40)

42

X DIRECTION

Z DIRECTION ◄

A ◄ —

# FIG. 2

34
40  36

44

32

30

38

42

40b

40a

36a

36b

X DIRECTION

Y DIRECTION

62  50  61

# FIG. 3

26

27

USER PC 20

**CONTROLLER** — 21

**CPU** — 22

**ROM** — 23

**RAM** — 24

- **POROUS BODY DATA** — 80
  - POROUS BODY TABLE — 81
  - INFLOW/OUTFLOW TABLE — 82
  - VIRTUAL CURVED SURFACE SOLID TABLE — 83

**HDD** — 25

- **ANALYSIS PROCESSING PROGRAM** — 25a
  - VIRTUAL CURVED SURFACE SOLID PLACEMENT MODULE — 25b
  - FLUID ANALYSIS MODULE — 25c
  - IN-PLANE UNIFORMITY INDEX EVALUATION MODULE — 25d
  - SPATIAL UNIFORMITY INDEX EVALUATION MODULE — 25e
  - PRESSURE DROP EVALUATION MODULE — 25f
  - FLOW-THROUGH VELOCITY EVALUATION MODULE — 25g
  - EQUIVALENT DIAMETER EVALUATION MODULE — 25h
  - ANALYSIS RESULT OUTPUT MODULE — 25i

- **POROUS BODY DATA** — 60
  - POROUS BODY TABLE — 71
  - INFLOW/OUTFLOW TABLE — 72

# FIG. 4

(a)

60

480 μm

62 (X,Y,Z)=(250,400,400)

480 μm

EXHAUST GAS PASSING DIRECTION

300 μm

Z=3

1.2 μm

61

X DIRECTION

Z DIRECTION

Y DIRECTION

(X,Y,Z)=(1,1,1)

(b)

MATTER PIXEL

63

SPACE PIXEL

64

MATTER PIXEL

SPACE PIXEL

1.2 μm

X DIRECTION

Y DIRECTION

1.2 μm

# FIG. 5

25

HDD

60

| X COORDINATE | Y COORDINATE | Z COORDINATE | TYPE INFORMATION |
|---|---|---|---|
| 1 | 1 | 1 | 0 |
| 2 | 1 | 1 | 9 |
| ⋮ | ⋮ | ⋮ | ⋮ |
| 250 | 400 | 399 | 9 |
| 250 | 400 | 400 | 9 |

71

| INFLOW FACE | OUTFLOW FACE |
|---|---|
| X=1 | X=251 |

72

# FIG. 6

```
                ┌─────────────────────────────────┐
                │    ANALYSIS PROCESSING ROUTINE   │
                └─────────────────────────────────┘
                                 │
        ┌──────────────────────────────────────────────┐
        │ VIRTUAL CURVED SURFACE SOLID PLACEMENT PROCESSING │ ⌒ S100
        └──────────────────────────────────────────────┘
                                 │
        ┌──────────────────────────────────────────────┐
        │            FLUID ANALYSIS PROCESSING          │ ⌒ S110
        └──────────────────────────────────────────────┘
                                 │
        ┌──────────────────────────────────────────────┐
        │    IN-PLANE UNIFORMITY INDEX EVALUATION PROCESSING  │ ⌒ S120
        └──────────────────────────────────────────────┘
                                 │
        ┌──────────────────────────────────────────────┐
        │   SPATIAL UNIFORMITY INDEX EVALUATION PROCESSING    │ ⌒ S130
        └──────────────────────────────────────────────┘
                                 │
        ┌──────────────────────────────────────────────┐
        │        PRESSURE DROP EVALUATION PROCESSING    │ ⌒ S140
        └──────────────────────────────────────────────┘
                                 │
        ┌──────────────────────────────────────────────┐
        │   FLOW-THROUGH VELOCITY EVALUATION PROCESSING │ ⌒ S150
        └──────────────────────────────────────────────┘
                                 │
        ┌──────────────────────────────────────────────┐
        │    EQUIVALENT DIAMETER EVALUATION PROCESSING  │ ⌒ S160
        └──────────────────────────────────────────────┘
                                 │
        ┌──────────────────────────────────────────────┐
        │        ANALYSIS RESULT OUTPUT PROCESSING      │ ⌒ S170
        └──────────────────────────────────────────────┘
                                 │
                    ┌──────────────────────┐
                    │         END          │
                    └──────────────────────┘
```

27

EP 2 832 417 A1

# FIG. 7

```
        ┌─────────────────────────────┐
        │ VIRTUAL CURVED SURFACE SOLID │
        │     PLACEMENT PROCESSING     │
        └─────────────────────────────┘
                      │
        ┌─────────────────────────────┐
        │   READ OUT POROUS BODY DATA  │── S200
        └─────────────────────────────┘
                      │
        ┌─────────────────────────────┐
        │   SET VIRTUAL WALL SURFACE   │── S210
        └─────────────────────────────┘
                      │
        ┌─────────────────────────────┐
        │        Ra←Ramax              │── S220
        └─────────────────────────────┘
                      │
                      ▼                              ┌──────────────────┐
        ┌─────────────────────────────┐   NO         │    Ra←Ra−1       │── S240
       ╱ PARENT VIRTUAL SPHERE OF      ╲─────────────→└──────────────────┘
       ╲ DIAMETER Ra CAN BE PLACED?   ╱── S230
        └─────────────────────────────┘
             │ YES
        ┌─────────────────────────────┐
        │ PLACE PARENT SPHERE OF DIAMETER Ra │── S250
        └─────────────────────────────┘
                      │
        ┌─────────────────────────────┐
        │          Rb←Ra              │── S260
        └─────────────────────────────┘
                      │
                      ▼                        ┌────────────────────────────┐
        ┌─────────────────────────────┐  YES   │ PLACE CHILD VIRTUAL SPHERE OF │── S280
       ╱ CHILD VIRTUAL SPHERE OF DIAMETER ╲────→│        DIAMETER Rb          │
       ╲ Rb CAN BE PLACED?              ╱── S270 └────────────────────────────┘
        └─────────────────────────────┘
             │ NO
        ┌─────────────────────────────┐
        │          Rb←Rb−1            │── S290
        └─────────────────────────────┘
                      │
        ┌─────────────────────────────┐  NO
       ╱         Rb<Rbmin?             ╲────────→
        └─────────────────────────────┘── S300
             │ YES
        ┌─────────────────────────────────────────┐
        │ PLACE VIRTUAL CURVED SURFACE SOLID FORMED OF │── S310
        │ PARENT VIRTUAL SPHERE AND CHILD VIRTUAL SPHERE │
        └─────────────────────────────────────────┘
                      │
        ┌─────────────────────────────────────────┐
        │ STORE INFORMATION RELATING TO PLACED VIRTUAL │── S320
        │        CURVED SURFACE SOLID             │
        └─────────────────────────────────────────┘
                      │
        ┌─────────────────────────────┐  NO
       ╱ 99% OR MORE OF SPACE PIXEL IS  ╲────────→
       ╲ CURVED SURFACE SOLID PIXEL?   ╱── S330
        └─────────────────────────────┘
             │ YES
        ┌─────────────────────────────┐
        │            END              │
        └─────────────────────────────┘
```

# FIG. 8

RAM — 24

83

| IDENTIFICATION SYMBOL OF VIRTUAL CURVED SURFACE SOLID | PARENT VIRTUAL SPHERE | | FIRST CHILD VIRTUAL SPHERE | | SECOND CHILD VIRTUAL SPHERE | | ... | | ___TH CHILD VIRTUAL SPHERE | |
|---|---|---|---|---|---|---|---|---|---|---|
| | CENTER COORDINATE (X, Y, Z) | DIAMETER ($\mu$m) | CENTER COORDINATE (X, Y, Z) | DIAMETER ($\mu$m) | CENTER COORDINATE (X, Y, Z) | DIAMETER ($\mu$m) | CENTER COORDINATE (X, Y, Z) | DIAMETER ($\mu$m) | CENTER COORDINATE (X, Y, Z) | DIAMETER ($\mu$m) |
| 1 | (X1,Y1,Z1) | R1 | ... | ... | ... | ... | ... | ... | ... | ... |
| 2 | (X2,Y2,Z2) | R2 | ... | ... | ... | ... | ... | ... | ... | ... |
| ... | ... | ... | ... | ... | ... | ... | ... | ... | ... | ... |
| m | (Xm,Ym,Zm) | Rm | ... | ... | ... | ... | ... | ... | ... | ... |

# FIG. 9

(a)

(b)

# FIG. 10

(a)

(b)

# FIG. 11

# FIG. 12

# FIG. 13

EXAMPLE 1      EXAMPLE 2

# FIG. 14

# FIG. 15

<table>
<tr><td colspan="2">**INTERNATIONAL SEARCH REPORT**</td><td>International application No.<br>PCT/JP2013/057974</td></tr>
</table>

A. CLASSIFICATION OF SUBJECT MATTER
*B01D39/20*(2006.01)i, *B01D46/00*(2006.01)i, *C04B35/565*(2006.01)i, *C04B38/06* (2006.01)i

According to International Patent Classification (IPC) or to both national classification and IPC

B. FIELDS SEARCHED

Minimum documentation searched (classification system followed by classification symbols)
B01D39/20, B01D46/00, C04B35/565, C04B38/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2009/122532 A1 (Ibiden Co., Ltd.),<br>08 October 2009 (08.10.2009),<br>paragraphs [0041] to [0043], [0053], [0068];<br>fig. 2<br>& US 2010/0247406 A1 & EP 2260921 A1 | 1-8 |
| A | JP 2009-517211 A (Corning Inc.),<br>30 April 2009 (30.04.2009),<br>paragraph [0035]; fig. 2<br>& US 2007/0119135 A1 & EP 1966108 A2<br>& WO 2007/064454 A2 & CN 101316804 A | 1-8 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>    05 April, 2013 (05.04.13) | Date of mailing of the international search report<br>    16 April, 2013 (16.04.13) |
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006001509 A
- JP 2005114612 A
- JP 2012082500 A